# EUROPEAN PATENT SPECIFICATION

(11) **EP 4 473 796 B1**
(45) Date of publication and mention of the grant of the patent: **21.10.2026**
(21) Application number: 22924413.2
(22) Date of filing: 31.01.2022
(51) Int. Cl.: H04W 88/08, H04W 72/12, H04L 67/60, H04B 7/06, H04L 5/00, H04W 72/566

(54) **LATENCY OPTIMIZED UPLINK FRONTHAUL INTERFACE**
LATENZOPTIMIERTE UPLINK-FRONTHAUL-SCHNITTSTELLE
INTERFACE FRONTHAUL DE LIAISON MONTANTE À LATENCE OPTIMISÉE

(43) Date of publication of application: 11.12.2024
(73) Proprietor: Telefonaktiebolaget LM Ericsson (publ), 164 83 Stockholm (SE)
(72) Inventor: LU, Chenguang, 191 63 Sollentuna (SE); GHASEMMEHDI, Arash, Ottawa, Ontario K2V 0A9 (CA); HUSS, Fredrik, 174 55 Sundbyberg (SE); KARLSSON, Jonas, 194 68 Upplands Väsby (SE)
(74) Representative: Ericsson
(86) International application number: PCT/SE2022/050099
(87) International publication number: WO 2023/146449

(56) References cited:
- EP-A1- 3 387 775
- EP-A1- 3 606 006
- WO-A1-2020/242352
- GB-A- 2 592 429
- GB-A- 2 592 429
- US-A1- 2021 400 527
- D. BOVIZ ET AL.: "Fronthaul for 5G: Low Bit-Rate Design Enabling Joint Transmission and Reception", 2016 IEEE GLOBECOM WORKSHOPS (GC WKSHPS, 2016, pages 1 - 6, XP033063096, DOI: 10.1109/GLOCOMW.2016.7848911
- QUALCOMM CDMA TECHNOLOGIES: "O_RAN_CUS_presentation", ETSI DRAFT; MSG(21)000019, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. TC MSG Mobile Standards Group, 24 November 2021 (2021-11-24), 650, route des Lucioles ; F-06921 Sophia-Antipolis ; France, pages 1 - 28, XP014416120
- NTT DOCOMO, INC.: "Overall of the proposed L1 processing diagram", 3GPP DRAFT; R3-173402_OVERALL OF PROPOSED L1 PROCESSING DIAGRAM_REV3, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Berlin, Germany; 20170821 - 20170825, 25 August 2017 (2017-08-25), Mobile Competence Centre ; 650, route des Lucioles ; F-06921 Sophia-Antipolis Cedex ; France , XP051330686
- L. M. P. LARSEN ET AL.: "A Survey of the Functional Splits Proposed for 5G Mobile Crosshaul Networks", IEEE COMMUNICATIONS SURVEYS & TUTORIALS, vol. 21, no. 1, 2019, pages 146 - 172, XP011711824, DOI: 10.1109/COMST.2018.2868805
- "IEEE Standard for Packet-based Fronthaul Transport Networks", IEEE STD 1914.1-20 19, 21 April 2020 (2020-04-21), pages 1 - 94, XP068166855, DOI: 10.1109/IEEESTD.2020.9079731

## Description

### TECHNICAL FIELD

The present disclosure relates generally to communications, and more particularly to communication methods and related devices and nodes supporting wireless communications.

### BACKGROUND

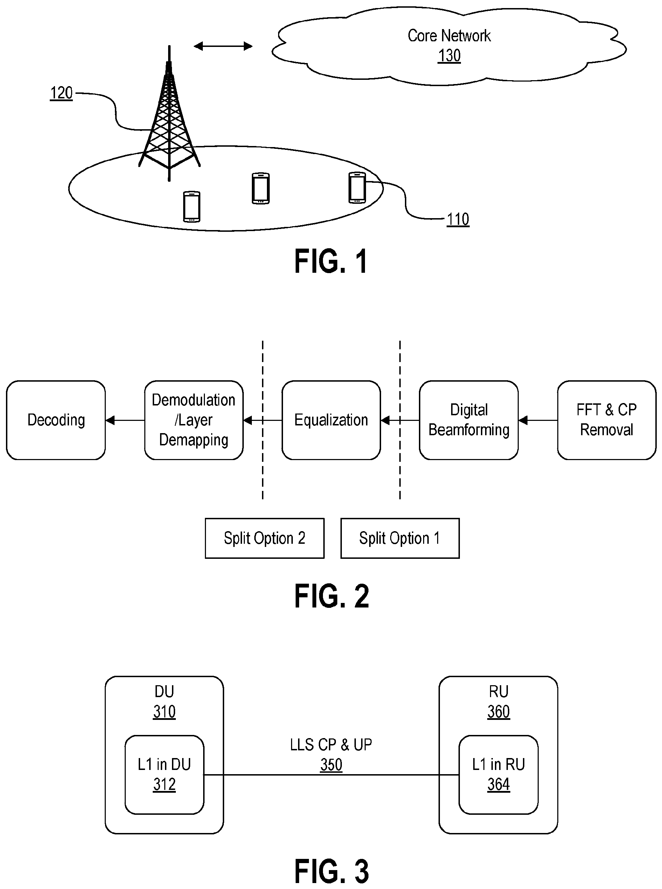

FIG. 1 illustrates an example of a new radio ("NR") network (e.g., a 5th Generation ("5G") network) including a 5G core ("5GC") network 130, network node 120 (e.g., 5G base station ("gNB")), multiple communication devices 110 (also referred to as user equipment ("UE")).

Transition to Ethernet-based fronthaul ("FH") networking based on interoperable lower layer splits ("LLS") is gaining momentum in radio access network ("RAN") deployments, where part of layer 1 ("L1") processing functions are moved to a radio unit ("RU"). This requires certain fronthaul data (e.g., user plane ("UP") data, control plane ("CP") data, and management plane data) be transported between the distributed unit ("DU") and RU.

FIG. 2 illustrates an example of a high-level L1 physical uplink shared channel ("PUSCH") processing chain. Depending on where the split happens, and which functions are moved to the RU, the data that will be transmitted from RU to DU for the PUSCH channel over the FH interface will be different.

In some examples, split option 2 is used for PUSCH channel processing. In additional or alternative examples, open-RAN ("O-RAN") is based on split option 1, which is also referred to as Split 7-2x in ORAN LLS terminology. For some existing technologies, when in-phase and quadrature ("IQ") data includes both user data symbols (sometimes referred to herein as simply data symbols) and demodulation reference signal ("DMRS") symbols, the order of transmission over the FH interface is the same as over the air interface. However, when DMRS channel estimates or other data types need to be transmitted over the FH interface, there are no standards specifying the order/priority of these data types.

Depending on which split realization is used, there are different types of FH data that need to be transferred from RU to DU for the continuation of PUSCH channel processing in a DU. Existing standards do not specify how to transfer the data over the FH interface for data types other than Data and DMRS IQ symbols. Existing implementations fail to even optimize the order of transmission for Data and DMRS IQ symbols to minimize the latency.
GB 2592429 discloses a method for managing compression loss in data transmitted over a fronthaul connection wherein data where compression loss would cause an unacceptable error vector magnitude is retransmitted with a different compression. A fronthaul IQ flow from a first pair of base stations may be prioritized over an IQ flow between a second pair of base stations using the same physical connection.

### SUMMARY

According to some embodiments, a method of operating a first network node in a communications network is provided. The communications network can include a second network node communicatively coupled to the first network node via a fronthaul interface and include a communication device communicatively coupled to the first network node. The method can include generating first data associated with an uplink signal received from the communication device. The method can further include generating second data associated with the uplink signal received from the communication device. The method can further include prioritizing transmission of the first data to the second network node via the fronthaul interface over transmission of the second data to the second network node via the fronthaul interface.

According to other embodiments, another method performed by a first network node in a communications network is provided. The communications network can include a second network node communicatively coupled to the first network node via a fronthaul interface and include a communication device communicatively coupled to the second network node. The method can include receiving first data from the second network node via the fronthaul interface. The first data can be associated with an uplink signal received from the communication device. The method can further include, responsive to receiving the first data, receiving second data from the second network node via the fronthaul interface. The second data can be associated with the uplink signal received from the communication device. The method can further include determining processed second data by processing the second data based on the first data. The method can further include processing the processed second data to decode information bits included in the second data.

According to other embodiments, a network node, a computer program, computer program code, and non-transitory computer-readable medium is provided to perform the methods above.

Various embodiments described herein reduce latency by prioritizing the transmission of certain data types over the fronthaul interface. In some embodiments, prioritizing the transmission of certain data types over the fronthaul interface can result in accelerated PUSCH L1 processing at a DU, which can improve performance for an end user by reducing the end-to-end ("E2E") latency. In additional or alternative embodiments, prioritizing the transmission of certain data types over the fronthaul interface can result in less buffering and memory requirements at the DU.

### BRIEF DESCRIPTION OF THE DRAWINGS

The accompanying drawings, which are included to provide a further understanding of the disclosure and are incorporated in and constitute a part of this application, illustrate certain non-limiting embodiments of inventive concepts. In the drawings:
FIG. 1 is a schematic diagram illustrating an example of a 5^{th} generation ("5G") network;
FIG. 2 is a block diagram illustrating an example of a physical uplink shared channel ("PUSCH")-processing chain;
FIG. 3 is a block diagram illustrating an example of the bidirectional layer 1 ("L1") lower layer split ("LLS") user plane ("UP") and control plane ("CP") communication path between the L1 components located in a distributed unit ("DU") and radio unit ("RU") in accordance with some embodiments;
FIG. 4 is a signal flow diagram illustrating an example of a first LLS in accordance with some embodiments;
FIG. 5 is a signal flow diagram illustrating an example of a second LLS in accordance with some embodiments;
FIG. 6 is a signal flow diagram illustrating an example of a third LLS in accordance with some embodiments;
FIG. 7 is a block diagram illustrating an example of communicating two types of fronthaul data separately in accordance with some embodiments;
FIG. 8 is a flow chart illustrating an example of operations performed by a RU in accordance with some embodiments;
FIG. 9 is a flow chart illustrating an example of operations performed by a DU in accordance with some embodiments;
FIG. 10 is a block diagram illustrating an example of an ordering of user data symbols and demodulation reference signals ("DMRS") symbols within a slot in accordance with some embodiments;
FIG. 11 is a block diagram illustrating an example of prioritizing beamformed DMRS symbols in accordance with some embodiments;
FIGS. 12-13 are flow charts illustrating examples of operations performed by a RU associated with the first LLS (e.g., as illustrated in FIG. 4) in accordance with some embodiments;
FIG. 14 is a flow chart illustrating examples of operations performed by a DU associated with the first LLS (e.g., as illustrated in FIG. 4) in accordance with some embodiments;
FIG. 15 is a flow chart illustrating examples of operations performed by a RU associated with the second LLS (e.g., as illustrated in FIG. 5) in accordance with some embodiments;
FIG. 16 is a flow chart illustrating examples of operations performed by a DU associated with the second LLS (e.g., as illustrated in FIG. 5) in accordance with some embodiments;
FIG. 17 is a block diagram illustrating an example of prioritizing beamformed and channel info in accordance with some embodiments;
FIG. 18 is a flow chart illustrating examples of operations performed by a RU associated with the third LLS (e.g., as illustrated in FIG. 6) in accordance with some embodiments;
FIG. 19 is a flow chart illustrating examples of operations performed by a DU associated with the third LLS (e.g., as illustrated in FIG. 6) in accordance with some embodiments;
FIG. 20 is a block diagram illustrating an example of prioritizing information regarding an equalizer in accordance with some embodiments;
FIG. 21 is a block diagram of a communication system in accordance with some embodiments;
FIG. 22 is a block diagram of a user equipment in accordance with some embodiments
FIG. 23 is a block diagram of a network node in accordance with some embodiments;
FIG. 24 is a block diagram of a host computer communicating with a user equipment in accordance with some embodiments;
FIG. 25 is a block diagram of a virtualization environment in accordance with some embodiments; and
FIG. 26 is a block diagram of a host computer communicating via a base station with a user equipment over a partially wireless connection in accordance with some embodiments in accordance with some embodiments.

### DETAILED DESCRIPTION

Some of the embodiments contemplated herein will now be described more fully with reference to the accompanying drawings. Embodiments are provided by way of example to convey the scope of the subject matter to those skilled in the art. Inventive concepts may, however, be embodied in many different forms and should not be construed as limited to the embodiments set forth herein. Rather, these embodiments are provided so that this disclosure will be thorough and complete, and will fully convey the scope of present inventive concepts to those skilled in the art. It should also be noted that these embodiments are not mutually exclusive. Components from one embodiment may be tacitly assumed to be present/used in another embodiment.

At the base-station side, the interface between a baseband unit ("BBU") and a radio unit ("RU") is the fronthaul interface, whereas the interface between the BBU and the core network ("CN") is the backhaul interface. The great benefits of massive multiple-input-multiple-output ("MIMO") at the air-interface also introduce new challenges at the base-station side. The legacy common public radio interface ("CPRI")-type fronthaul transports in-phase and quadrature ("IQ") samples per antenna branch. As the number of antennas scales up in massive MIMO systems, the required fronthaul capacity also increases proportionally, which significantly drives up the fronthaul costs. To address this challenge, the fronthaul interface evolves from CPRI to enhanced CPRI ("eCPRI"), a packet-based fronthaul interface. In eCPRI, other functional split options between a BBU and a RU are supported, referred to as different lower-layer split ("LLS") options. The basic idea is to move the frequency-domain beamforming function from BBU to RU so that frequency samples or data of user-layers or spatial streams are transported over the fronthaul interface. Note that the frequency-domain beamforming is sometimes also referred to as precoding in the DL direction and equalizing or pre-equalizing in UL direction. By doing this, the required fronthaul capacity and thereby the fronthaul costs can be significantly reduced, as the number of user layers is typically much fewer than the number of antennas in massive MIMO.

The following provide the definitions of the relevant terminologies used in this document.

The term radio unit ("RU") can be used herein to refer to a network node (or a portion of a network node) that performs radio functions including a portion of physical layer ("PHY") functions according to an LLS option. The RU can perform conversions between radio frequency ("RF") signals and baseband signals. On the network side a RU can transmit and receive the frequency-domain IQ data (modulated user data) or unmodulated user data to and from BBU through a fronthaul interface (e.g. eCPRI). The RU can also transmit and receive the RF signals to and from UEs through its antennas.

The term baseband unit ("BBU") can be used herein to refer to a network node (or a portion of a network node) that performs baseband processing. The BBU can communicatively couple to the CN via a backhaul interface or to a central unit ("CU") via an F1 interface.

In an open radio access network ("O-RAN") the BBU and RU can be referred to as O-DU and O-RU, respectively. In distributed-MIMO ("D-MIMO") terminology, the RU can also be referred to as an access point ("AP") and the BBU can be referred to as a central processing unit ("CPU") or edge cloud processor. In some terminologies, the RU can also be referred to as remote radio unit ("RRU") and the BBU can be referred to as a digital unit or distributed unit ("DU"). In eCPRI terminologies, the BBU and the RU are referred to as an eCPRI radio equipment control ("eREC") and eCPRI radio equipment ("eRE") respectively. In another terminology, a BBU and a RU may be referred to as a LLS-CU and a LLS-DU respectively. The BBU and its equivalence can also be softwarized or virtualized as Baseband Processing Function in a Cloud environment. Use of the terms BBU and RU herein are not intended to limit the application of the innovation, which can be used in any suitable wireless field.

The term beam can be used herein to refer to a directional beam formed by multiplying a signal with different weights, in frequency-domain, at multiple antennas such that the energy of the wanted signal is concentrated to a certain direction and/or the energy of the interreference signal is nulled at a certain direction.

The term beamforming can be used herein to refer to a technique which multiplies a signal with different weights (in frequency-domain) at multiple antennas, which enables the signal energy to be sent in space with a desired beam pattern by forming a directional beam concentrating on certain direction or forming nulling in certain direction, or a combination of both.

The term beamforming weight ("BFW') can be used herein to refer to a set of one or more complex weights, each set is multiplied with a signal of one user-layer at a subcarrier or a group of subcarriers. The weighted signals of different user layers towards the same antenna or transmit beam are combined linearly. As a result, different user-layer signals are beamformed to different directions.

The term user-plane data can be used herein to refer to the frequency-domain user-layer data sent over fronthaul.

The term beamforming performance can be used herein to refer to signal quality in DL at the UE side after the beamforming has been performed at the base-station side, measured by, for example, post-processing signal-to-interference-and-noise-power ratio ("SINR") at a UE, resulted user throughput, bit rate, etc. For UL, it refers to signal quality at the base station side after the beamforming has been performed at the base-station side, measured by, for example, post-processing signal-to-interference-and-noise-power ratio ("SINR") at the base station side, resulted user throughput, bit rate, etc.

The term channel information can be used herein to refer to information about channel properties carried by the channel values. Channel value (also referred to as channel data) can refer to one or a set of complex values representing the amplitude and phase of the channel coefficients in frequency domain. The channel values are related to the frequency response of the wireless channel.

FIG. 3 illustrates an example of the bidirectional L1 LLS UP and CP communication path 350 between the L1 components 312, 364 located in the DU 310 and radio unit RU 360.

Various embodiments herein identify different data types, and specify a more latency optimized order/priority in which this information is transmitted to a DU to improve the L1 PUSCH processing latency. Some embodiments are directed to a specific LLS in an uplink PUSCH channel (e.g., split option 1 and split option 2 as illustrated in FIG. 2).

In some embodiments associated with split option 1, when there are the IQ data of User Data and DMRS symbols that need to be transferred to the DU, the IQ data of DMRS symbols can be transmitted with a higher priority than the User Data symbols. This can allow the channel estimation to start earlier in the DU and be ready when the User Data symbols arrive. In additional or alternative embodiments, when there are other types than the IQ data of DMRS and User Data symbols (e.g., channel estimates), transmission of the channel estimates can be prioritized over the IQ data of User Data symbols.

Various embodiments described herein reduce latency by prioritizing the transmission of certain data types over the fronthaul interface. In some embodiments, prioritizing the transmission of certain data types over the fronthaul interface can result in accelerated PUSCH L1 processing at a DU, which can improve performance for an end user by reducing the end-to-end ("E2E") latency. In additional or alternative embodiments, prioritizing the transmission of certain data types over the fronthaul interface can result in less buffering and memory requirements at the DU.

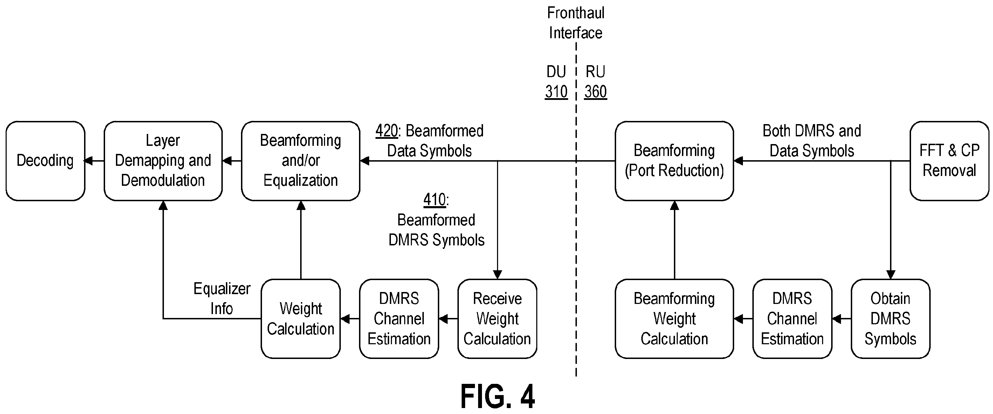

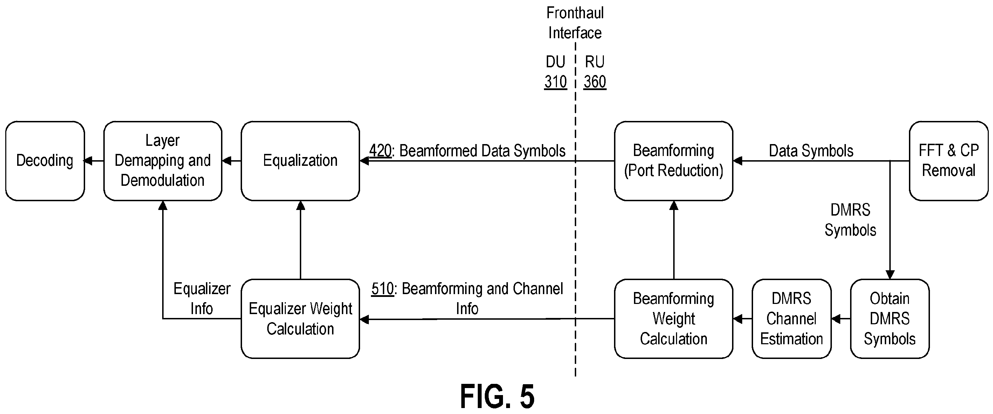

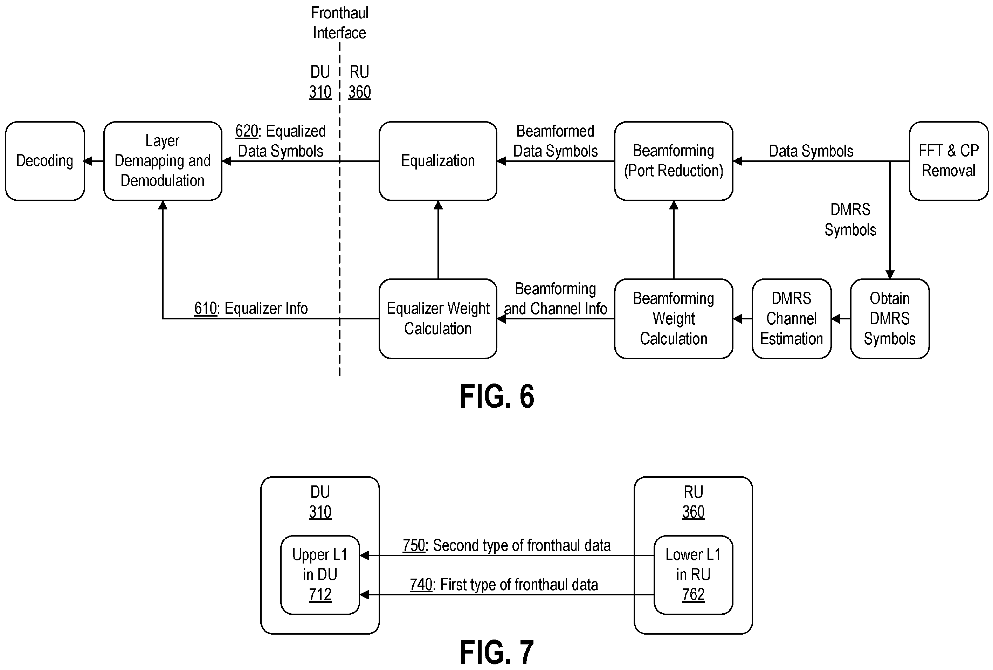

FIGS. 4-6 illustrate examples of some of the PUSCH LLS options (e.g., split option 1 and split option 2 of FIG. 2) depending on what part of processing is done in the RU and DU and what information is transferred over the interface between them. From hereon the split option illustrated in FIG. 4 will be referred to the first split option, the split option illustrated in FIG. 5 will be referred to as the second split option, and the split option illustrated in FIG. 6 will be referred to as the third split option.

FIG. 4 illustrates the first split option in which the RU 360 performs channel estimation (e.g., based on DMRS) and calculates the BFWs based on the channel estimates. Then the RU 360 performs port reduction using the beamforming weights for all symbols.

The beamformed DMRS symbols 410 are sent to the DU 310 over the fronthaul interface and the beamformed user data symbols 420 are sent to the DU 310 over the fronthaul interface. In the DU 310, re-estimation of the channel and interference is done using the beamformed DMRS symbols 410, which can be referred to as combined DMRS symbols.

FIG. 5 illustrates the second split option. As illustrated the RU 360 performs DMRS symbol extraction, channel estimation, and beamforming weight calculation. Then the RU 360 performs port reduction using the beamforming weights for the user data symbols.

In order for the DU 310 to perform equalization, parameters 510 describing the combined channel estimate regarding RU beamforming weights and the channel estimates, as well as interference, need to be sent from the RU 360 to the DU 310. Accordingly, the parameters 510 describing the combined channel estimate and interference are sent over the fronthaul interface (in contrast to the beamformed DMRS symbols 410 in FIG. 4) and the beamformed user data symbols 420 are sent over the fronthaul interface (similar to as in FIG. 4).

As illustrated the RU 360 performs DMRS symbol extraction, channel estimation, beamforming weight calculation, and equalizer weight calculation. Then the RU 360 performs port reduction and equalization using the beamforming and equalizer weights for the user data symbols.

Equalized user data symbols 620 are sent to the DU 310 over the fronthaul interface and equalizer information 610 are sent to the DU 310 over the fronthaul interface to assist the demodulation of the user data symbols.

Typically combining (also referred to as beamforming and/or port reduction) and equalization is done using a minimum mean square error ("MMSE") criterion. First assume a signal model for one subcarrier in an orthogonal frequency-division multiplexing ("OFDM") symbol: $y = Hx + n$

Here *x* is a *L* x 1 vector for the transmit signal with *L* MIMO layers which are uncorrelated and with unit variance, *H* is an *N x L* channel matrix for *N* receive antennas and *L* layers and *n* is a *L* x 1 noise vector with covariance *Q*.

For the first split option and the second split option, beamforming and port reduction is done using weights *W*: $z = {W}^{H} y$

For the first split option, the combined channel estimate *W^{H}H* and the combined noise covariance *W^{H}QW* may need to be re-estimated from the DMRS symbols in the DU before equalizer weight calculation.

In the second split option, the channel estimate *H* and the combining weights *W* may need to be transferred for equalizer weight calculation in the DU. Alternatively, the combined channel estimate *W^{H}H* and the combined noise covariance *W^{H}QW* can be transferred to the DU. Alternatively, a whitened matched filter can be used for the weights W in the RU so that the combined noise covariance becomes the unity matrix, and then it is sufficient to transfer the combined channel estimate *W^{H}H* to the DU.

In the third split option, the MMSE criterion is used to estimate the transmit signal in the RU as: $\hat{x} = {H}^{H} {\left({HH}^{H}+Q\right)}^{- 1} y = {\left({H}^{H}{Q}^{- 1}H+I\right)}^{- 1} {H}^{H} {Q}^{- 1} y$ where the last expression follows from the matrix inversion lemma.

To perform proper log-likelihood ratio ("LLR") demapping in the DU, the equivalent channel: $G = {\left({H}^{H}{Q}^{- 1}H+I\right)}^{- 1} {H}^{H} {Q}^{- 1} H = I - {\left({H}^{H}{Q}^{- 1}H+I\right)}^{- 1}$ needs to be transferred from the RU to the DU. If the layers are processed independently in the DU, it is sufficient to transfer the diagonal of *G.* Any other parameter that gives equivalent information could be transferred instead, for example *I - G.*

FIG. 7 illustrates an example in which two types of fronthaul data 740, 750 are transmitted from the RU 360 to the DU 310. In PUSCH processing, the RU 360 performs the lower L1 part 762 (e.g., Fast Fourier Transforms ("FFT") and frequency domain beamforming), while the DU 310 performs the upper L1 part 712 (e.g., equalization, demodulation, and decoding). The RU 360 and DU 310 are interconnected via fronthaul interface. In some embodiments, the fronthaul data related to PUSCH processing are categorized as Type 1 fronthaul data 740 and Type 2 fronthaul data 750, which are sent by a first fronthaul data flow a second fronthaul data flow, respectively. The Type 1 fronthaul data 740 can carry the information which is required to process the Type 2 fronthaul data 750 at the DU 310. In some embodiments, the Type 1 fronthaul data 740 is prioritized over the Type 2 fronthaul data 750. Therefore, RU 360 sends the Type 1 fronthaul data 740 first and then sends the Type 2 fronthaul data. Since the Type 1 fronthaul data are sent with higher priority, if fronthaul traffic go through a switched network (e.g., with Ethernet or IP switches), the switches between DU and RU will also prioritize the Type 1 fronthaul data over the Type 2 fronthaul data by attempting to send Type 1 fronthaul data first. In this way, the DU 310 can process the Type 1 fronthaul data 740 first while waiting or receiving the Type 2 fronthaul data 750. Then the DU 310 can start to process the Type 2 fronthaul data 750 immediately when it receives it. As a result, the latency is reduced compared to if the Type 1 fronthaul data is not prioritized.

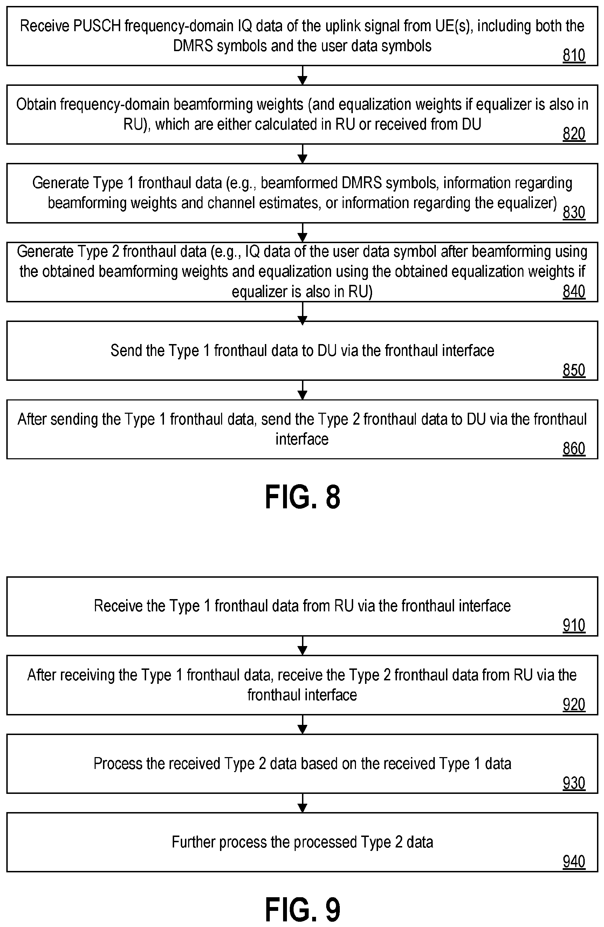

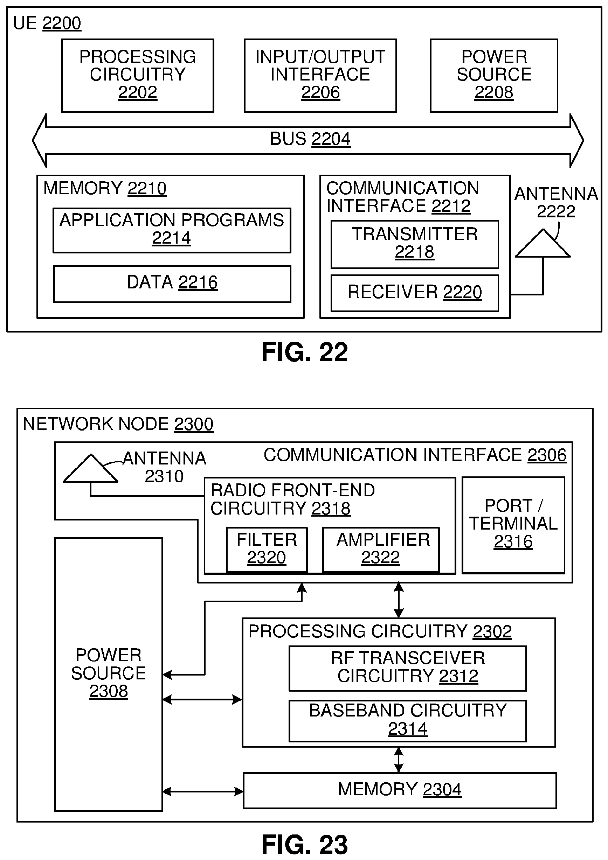

Operations of the RAN node 2300 (implemented using the structure of FIG. 23) will now be discussed with reference to the flow charts of FIGS. 8-9, 12-16, and 18-19 according to some embodiments of inventive concepts. For example, modules may be stored in memory 2304 of FIG. 23, and these modules may provide instructions so that when the instructions of a module are executed by respective RAN node processing circuitry 2320, RAN node 2300 performs respective operations of the flow chart.

FIG. 8 illustrates operations performed by a RU according to some embodiments (including the first split option, the second split option, and the third split option). In all three split options, the Type 2 fronthaul data includes the IQ data of the user data symbols after beamforming in the RU. In the first split option, the Type 1 fronthaul data includes the beamformed DMRS symbols. In the second split option, the Type 1 fronthaul data includes the information regarding frequency-domain beamforming weights and channel estimates. In the third split option, the Type 1 fronthaul data includes the information regarding the equalizer.

At block 810, processing circuitry 2302 receives, via communication interface 2306, PUSCH frequency-domain IQ data of the received uplink signal from the UE(s), including both the DMRS symbols and the user data symbols.

At block 820, processing circuitry 2302 obtains frequency-domain beamforming weights (and equalization weights if equalizer is also in the RU), which are either calculated in RU or received from DU.

At block 830, processing circuitry 2302 generates Type 1 fronthaul data (e.g., beamformed DMRS symbols for the first split option, information regarding frequency-domain beamforming weights and channel estimates for the second split option, or information regarding the equalizer for the third split option).

At block 840, processing circuitry 2302 generates Type 2 fronthaul data (e.g., IQ data of the user data symbol after beamforming using the obtained frequency-domain beamforming weights and equalization using the obtained equalization weights if equalizer is also in the RU).

At block 850, processing circuitry 2302 sends, via communication interface 2306, the Type 1 fronthaul data to the DU via the fronthaul interface

At block 860, processing circuitry 2302 sends, via communication interface 2306 and after sending the Type 1 fronthaul data, the Type 2 fronthaul data to the DU via the fronthaul interface.

Various operations from the flow chart of FIG. 8 may be optional with respect to some embodiments of RUs and related methods. For example, operations of blocks 810 and 820 of FIG. 8 may be optional.

FIG. 9 illustrates operations performed by a DU according to some embodiments (including the first split option, the second split option, and the third split option). The DU receives the Type 1 fronthaul data before receiving the Type 2 fronthaul data.

At block 910, processing circuitry 2302 receives, via communication interface 2306, the Type 1 fronthaul data from the RU via the fronthaul interface.

At block 920, processing circuitry 2302 receives, via communication interface 2306 and after receiving the Type 1 fronthaul data, the Type 2 fronthaul data from the RU via the fronthaul interface.

At block 930, processing circuitry 2302 processes the received Type 2 data based on the received Type 1 data. In some examples, the DU processes the Type 1 fronthaul data while waiting (and/or while receiving) the Type 2 fronthaul data. In the first split option, the Type 1 fronthaul data are used to calculate the DU beamforming and/or equalization weights. In the second split option, the Type 1 fronthaul data are used to calculate the DU equalization weights. In the third split option, the Type 1 fronthaul data will be directly used to assist the demodulation of equalized the user data symbols (e.g., the Type 2 fronthaul data).

Once the Type 2 fronthaul data are received, the DU uses the processing results of the Type 1 fronthaul data to assist the processing of the Type 2 fronthaul data. In the first split option, the DU performs the beamforming and/or equalization of the Type 2 fronthaul data using the weights which are already calculated with the Type 1 fronthaul data during the time of waiting or receiving the Type 2 fronthaul data.

In some embodiments, determining the processed second data comprises performing equalization on the IQ data of the user data symbols. In additional or alternative embodiments, determining the processed second data includes performing layer demapping and demodulating the IQ data of the equalized user data symbols based on the information associated with the equalizer of the second network node.

At block 940, processing circuitry 2302 further processes the processed Type 2 data. In some embodiments, processing the processed second data includes performing layer-demapping, demodulation, and decoding of the processed second data. In additional or alternative embodiments, processing the processed second data includes performing decoding of the processed second data.

Various operations from the flow chart of FIG. 9 may be optional with respect to some embodiments of DUs and related methods.

Embodiments associated with the first split option are described below.

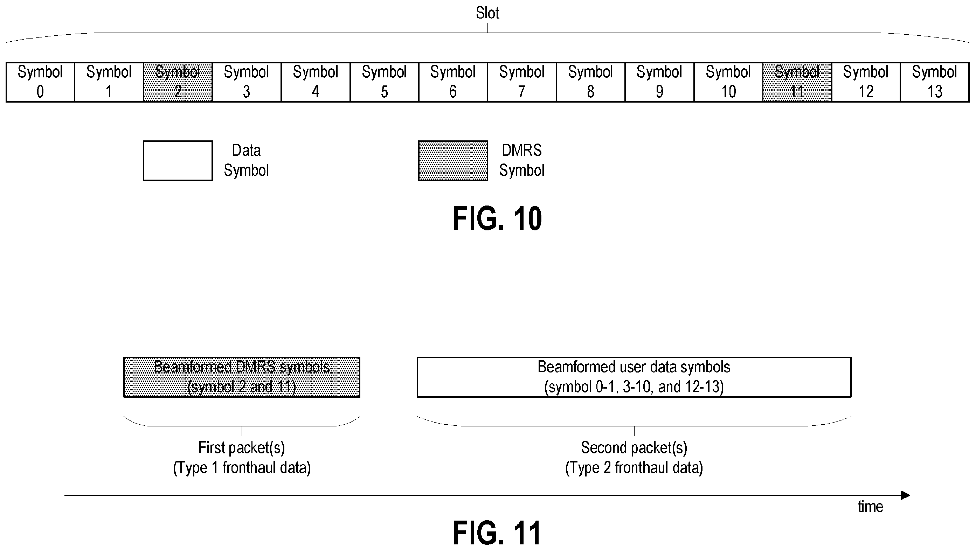

In the first split option, Type 1 fronthaul data includes the beamformed (or combined) DMRS symbols in a slot while Type 2 fronthaul data includes the beamformed (or combined) user data symbols. FIG. 10 shows an example of the slot structure of a PUSCH in 5G NR and 4G LTE. In this example, two DMRS symbols (shaded) are at the positions of symbol 2 and symbol 11. From the air interface, a RU receives each slot including 14 symbols in the order as illustrated in FIG. 10

In the first split option, the DMRS symbols are beamformed first at the RU. FIG. 11 illustrates an example in which the beamformed DMRS symbols in a slot are sent in the first packet(s) and the beamformed user data symbols in the slot are sent in the second packets. As a result, the beamformed DMRS symbols are sent first to the DU over fronthaul interface and then the user data symbols are beamformed and sent to the DU.

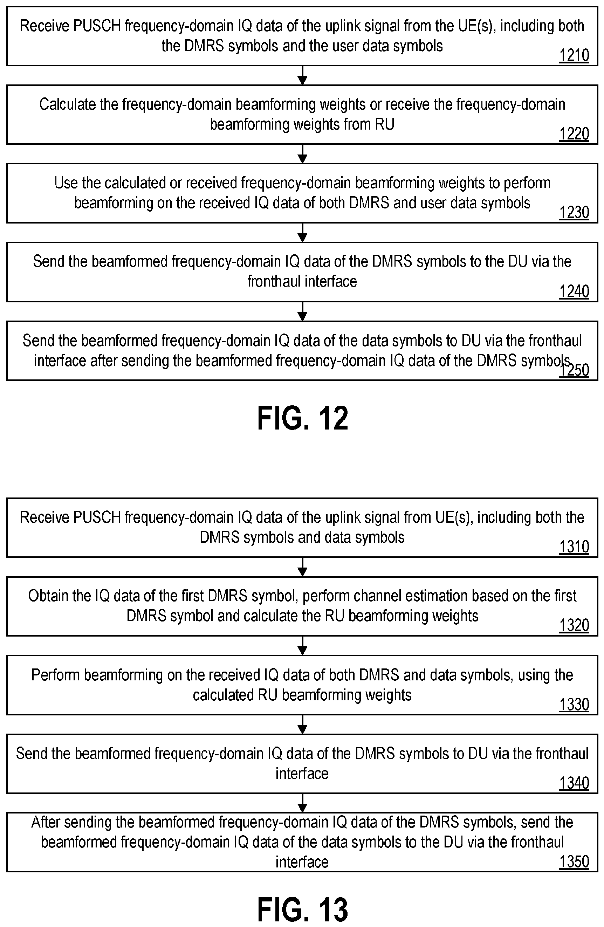

FIG. 12 illustrates an example of operations performed by a RU in association with the first split option. FIG. 13 illustrates an example of alternative operations performed by a RU in association with the first split option. The difference in the operations is that in FIG. 12, the RU only uses the first DMRS symbol (e.g., symbol 2) for channel estimation and calculates the RU frequency-domain beamforming weights without using the second DMRS (e.g., symbol 11). This would make the RU processing faster without the need to wait until the second DMRS symbol is received and processed. The latency is further reduced. The performance degradation would be minor when the channel variation is slow (e.g., in some low/medium-mobility use cases in some vertical scenarios, like a smart factory).

At block 1210, processing circuitry receives, via communication interface 2306, PUSCH frequency-domain IQ data of the received uplink signal from UE(s), including both DMRS and user data symbols.

At block 1220, processing circuitry calculates the frequency-domain beamforming weights or receives the frequency-domain beamforming weights from the RU.

At block 1230, processing circuitry 2302 uses the calculated frequency-domain beamforming weights to perform beamforming on the received IQ data of the DMRS symbols and the user data symbols.

At block 1240, processing circuitry 2302 transmits, via communication interface 2306, the beamformed IQ data of the DMRS symbols to the DU via the fronthaul interface.

At block 1250, processing circuitry 2302 transmits, via communication interface 2306, the beamformed IQ data of the user data symbols to DU via the fronthaul interface after sending the information regarding frequency-domain beamforming weights and channel estimates via the fronthaul interface.

At block 1310, processing circuitry receives, via communication interface 2306, PUSCH frequency-domain IQ data of the received uplink signal from the UE(s), including both DMRS and user data symbols.

At block 1320, processing circuitry obtains the IQ data of the first DMRS symbol, performs channel estimation based on the first DMRS symbol, and calculates the RU frequency-domain beamforming weights.

At block 1330, processing circuitry 2302 performs beamforming on the received IQ data of both DMRS and user data symbols using the calculated RU frequency-domain beamforming weights

At block 1340, processing circuitry 2302 transmits, via communication interface 2306, the beamformed IQ data of the DMRS symbols to the DU via the fronthaul interface.

At block 1350, processing circuitry 2302 transmits, via communication interface 2306, the beamformed IQ data of the user data symbols to DU via the fronthaul interface after sending the information regarding frequency-domain beamforming weights and channel estimates via the fronthaul interface.

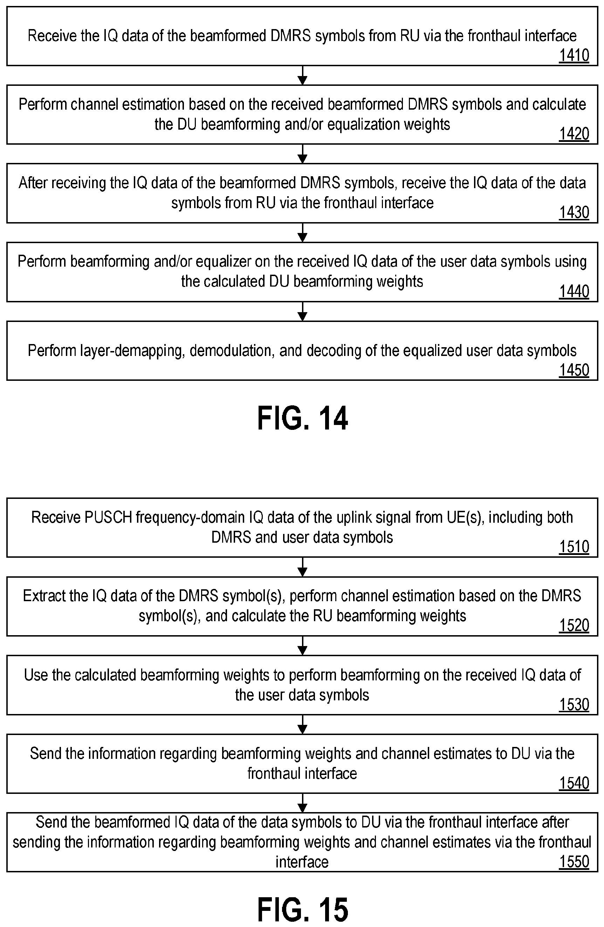

FIG. 14 illustrates corresponding operations performed by a DU in association with the first split option.

At block 1410, processing circuitry 2302 receives, via communication interface 2306, the IQ data of the beamformed DMRS symbols from RU via the fronthaul interface.

At block 1420, processing circuitry 2302 performs channel estimation based on the received beamformed DMRS symbols and calculates the DU beamforming and/or equalization weights.

At block 1430, processing circuitry 2302 receives, via communication interface 2306 and after receiving the IQ data of the beamformed DMRS symbols, the IQ data of the user data symbols from RU via the fronthaul interface.

At block 1440, processing circuitry 2302 performs beamforming and/or equalizer on the received IQ data of the user data symbols using the calculated DU frequency-domain beamforming weights.

At block 1450, processing circuitry 2302 performs layer-demapping, demodulation, and decoding of the equalized user data symbols.

Various operations from the flow chart of FIGS. 12-14 may be optional with respect to some embodiments of RUs, DUs and related methods.

Embodiments associated with the second split option are described below.

FIG. 15 illustrates an example of operations performed by a RU in association with the second split option.

At block 1510, processing circuitry receives, via communication interface 2306, PUSCH frequency-domain IQ data of the received uplink signal from UE(s), including both DMRS and user data symbols.

At block 1520, processing circuitry 2302 extracts the IQ data of the DMRS symbols(s), performs channel estimation based on the DMRS symbol(s), and calculates the RU frequency-domain beamforming weights.

At block 1530, processing circuitry 2302 uses the calculated frequency-domain beamforming weights to perform beamforming on the received IQ data of the user data symbols.

At block 1540, processing circuitry 2302 transmits, via communication interface 2306, the information regarding frequency-domain beamforming weights and channel estimates to DU via the fronthaul interface.

At block 1550, processing circuitry 2302 transmits, via communication interface 2306, the beamformed IQ data of the user data symbols to DU via the fronthaul interface after sending the information regarding frequency-domain beamforming weights and channel estimates via the fronthaul interface.

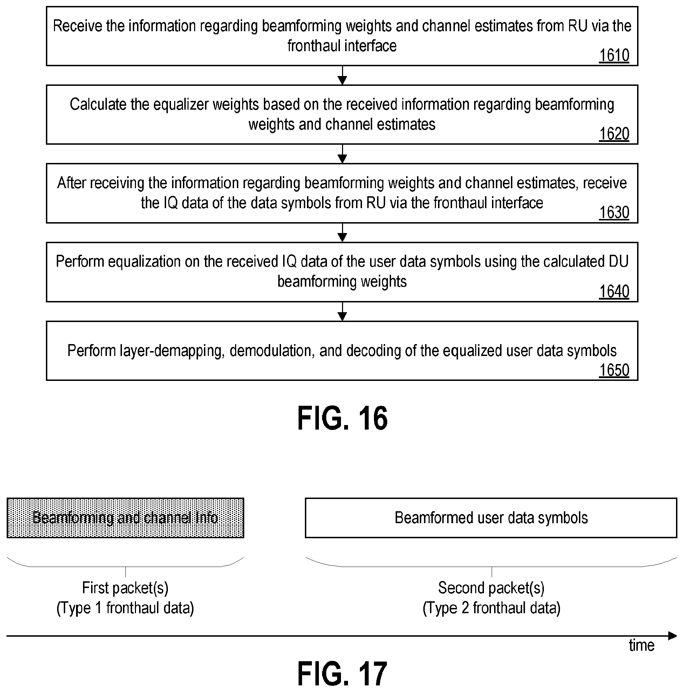

FIG. 16 illustrates corresponding operations performed by a DU in association with the second split option.

At block 1610, processing circuitry 2302 receives, via communication interface 2306, the information regarding frequency-domain beamforming weights and channel estimates from RU via the fronthaul interface

At block 1620, processing circuitry 2302 calculates the equalizer weights based on the received information regarding frequency-domain beamforming weights and channel estimates.

At block 1630, processing circuitry 2302 receives, via communication interface 2306 and after receiving the information regarding frequency-domain beamforming weights and channel estimates, the IQ data of the user data symbols from the RU via the fronthaul interface.

At block 1640, processing circuitry 2302 performs equalization on the received IQ data of the user data symbols using the calculated DU frequency-domain beamforming weights.

At block 1650, processing circuitry 2302 performs layer-demapping, demodulation, and decoding of the equalized user data symbols.

Various operations from the flow chart of FIGS. 15-16 may be optional with respect to some embodiments of RUs, DUs and related methods.

FIG. 17 illustrates the prioritization of sending the beamforming and channel information over the fronthaul.

Embodiments associated with the third split option are described below.

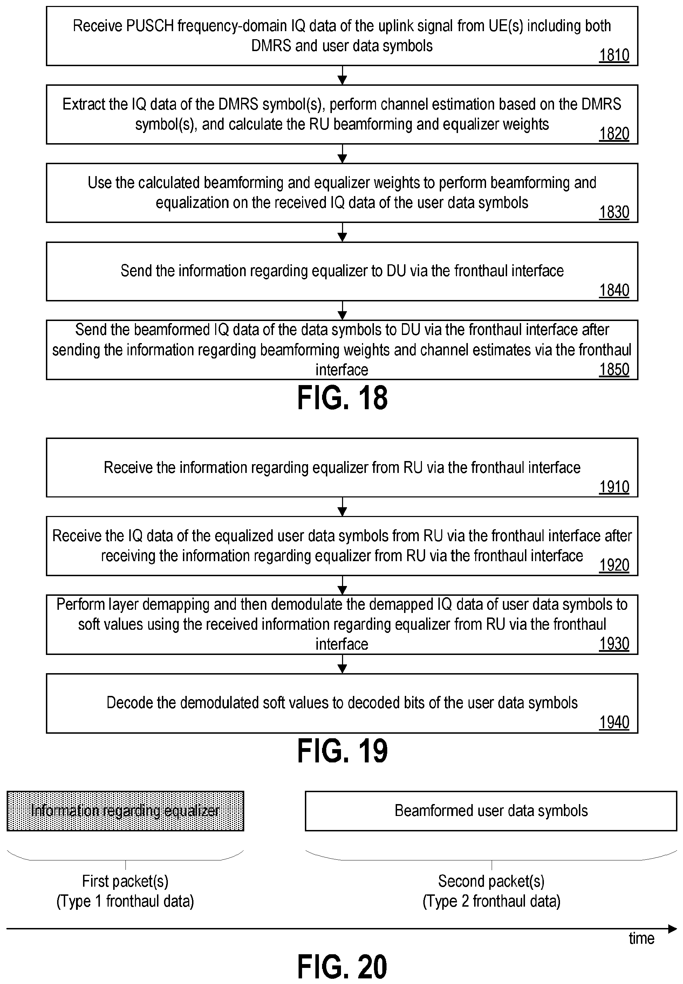

FIG. 18 illustrates an example of operations performed by a RU in association with the third split option.

At block 1810, processing circuitry 2303 receives, via communication interface 2306, PUSCH frequency-domain IQ data of the received uplink signal of UE(s) including both DMRS and user data symbols.

At block 1820, processing circuitry 2302 extracts the IQ data of the DMRS symbol(s) , performs channel estimation based on the DMRS symbol(s), and calculates the RU beamforming and equalizer weights.

At block 1830, processing circuitry 2302 uses the calculated beamforming and equalizer weights to perform beamforming and equalization on the received IQ data of the user data symbols.

At block 1840, processing circuitry 2302 sends, via communication interface 2306, the information regarding equalizer to DU via the fronthaul interface.

At block 1850, processing circuitry 2302 sends, via communication interface 2306, the beamformed IQ data of the user data symbols to the DU via the fronthaul interface after sending the information regarding frequency-domain beamforming weights and channel estimates via the fronthaul interface.

FIG. 19 illustrates corresponding operations performed by a DU in association with the third split option.

At block 1910, processing circuitry 2302 receives, via communication interface 2306, the information regarding equalizer from RU via the fronthaul interface.

At block 1920, processing circuitry 2302 receives, via communication interface 2306, the IQ data of the equalized user data symbols from RU via the fronthaul interface after receiving the information regarding equalizer from RU via the fronthaul interface.

At block 1930, processing circuitry 2302 performs layer demapping and then demodulates the demapped IQ data of user data symbols to soft values using the received information regarding equalizer from RU via the fronthaul interface.

At block 1940, processing circuitry 2302 decodes the demodulated soft values to decoded bits of the user data symbols.

Various operations from the flow chart of FIGS. 18-19 may be optional with respect to some embodiments of RUs, DUs and related methods.

FIG. 20 illustrates the prioritization of sending the information regarding the equalizer over the fronthaul.

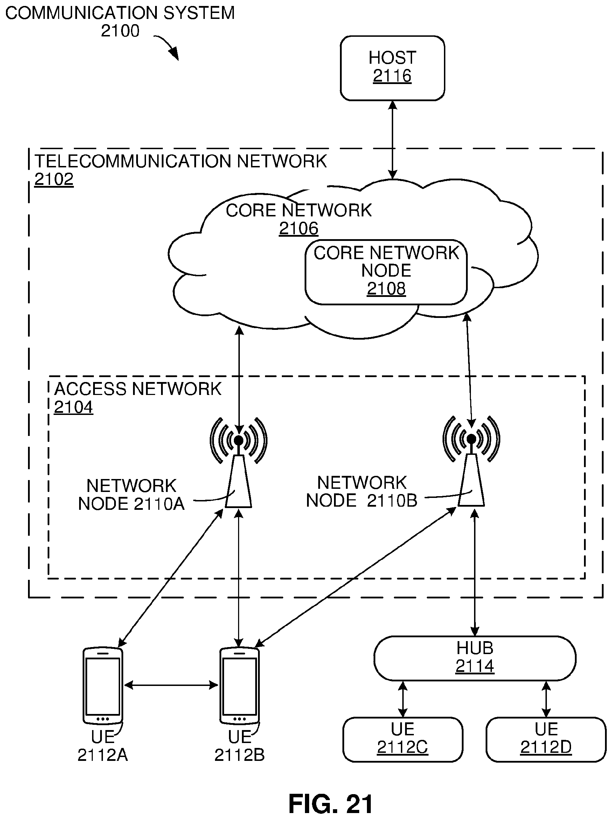

**FIG. 21** shows an example of a communication system 2100 in accordance with some embodiments.

In the example, the communication system 2100 includes a telecommunication network 2102 that includes an access network 2104, such as a radio access network (RAN), and a core network 2106, which includes one or more core network nodes 2108. The access network 2104 includes one or more access network nodes, such as network nodes 2110a and 2110b (one or more of which may be generally referred to as network nodes 2110), or any other similar 3^{rd} Generation Partnership Project (3GPP) access node or non-3GPP access point. The network nodes 2110 facilitate direct or indirect connection of user equipment (UE), such as by connecting UEs 2112a, 2112b, 2112c, and 2112d (one or more of which may be generally referred to as UEs 2112) to the core network 2106 over one or more wireless connections.

Example wireless communications over a wireless connection include transmitting and/or receiving wireless signals using electromagnetic waves, radio waves, infrared waves, and/or other types of signals suitable for conveying information without the use of wires, cables, or other material conductors. Moreover, in different embodiments, the communication system 2100 may include any number of wired or wireless networks, network nodes, UEs, and/or any other components or systems that may facilitate or participate in the communication of data and/or signals whether via wired or wireless connections. The communication system 2100 may include and/or interface with any type of communication, telecommunication, data, cellular, radio network, and/or other similar type of system.

The UEs 2112 may be any of a wide variety of communication devices, including wireless devices arranged, configured, and/or operable to communicate wirelessly with the network nodes 2110 and other communication devices. Similarly, the network nodes 2110 are arranged, capable, configured, and/or operable to communicate directly or indirectly with the UEs 2112 and/or with other network nodes or equipment in the telecommunication network 2102 to enable and/or provide network access, such as wireless network access, and/or to perform other functions, such as administration in the telecommunication network 2102.

In the depicted example, the core network 2106 connects the network nodes 2110 to one or more hosts, such as host 2116. These connections may be direct or indirect via one or more intermediary networks or devices. In other examples, network nodes may be directly coupled to hosts. The core network 2106 includes one more core network nodes (e.g., core network node 2108) that are structured with hardware and software components. Features of these components may be substantially similar to those described with respect to the UEs, network nodes, and/or hosts, such that the descriptions thereof are generally applicable to the corresponding components of the core network node 2108. Example core network nodes include functions of one or more of a Mobile Switching Center (MSC), Mobility Management Entity (MME), Home Subscriber Server (HSS), Access and Mobility Management Function (AMF), Session Management Function (SMF), Authentication Server Function (AUSF), Subscription Identifier De-concealing function (SIDF), Unified Data Management (UDM), Security Edge Protection Proxy (SEPP), Network Exposure Function (NEF), and/or a User Plane Function (UPF).

The host 2116 may be under the ownership or control of a service provider other than an operator or provider of the access network 2104 and/or the telecommunication network 2102, and may be operated by the service provider or on behalf of the service provider. The host 2116 may host a variety of applications to provide one or more service. Examples of such applications include live and prerecorded audio/video content, data collection services such as retrieving and compiling data on various ambient conditions detected by a plurality of UEs, analytics functionality, social media, functions for controlling or otherwise interacting with remote devices, functions for an alarm and surveillance center, or any other such function performed by a server.

As a whole, the communication system 2100 of FIG. 21 enables connectivity between the UEs, network nodes, and hosts. In that sense, the communication system may be configured to operate according to predefined rules or procedures, such as specific standards that include, but are not limited to: Global System for Mobile Communications (GSM); Universal Mobile Telecommunications System (UMTS); Long Term Evolution (LTE), and/or other suitable 2G, 3G, 4G, 5G standards, or any applicable future generation standard (e.g., 6G); wireless local area network (WLAN) standards, such as the Institute of Electrical and Electronics Engineers (IEEE) 802.11 standards (WiFi); and/or any other appropriate wireless communication standard, such as the Worldwide Interoperability for Microwave Access (WiMax), Bluetooth, Z-Wave, Near Field Communication (NFC) ZigBee, LiFi, and/or any low-power wide-area network (LPWAN) standards such as LoRa and Sigfox.

In some examples, the telecommunication network 2102 is a cellular network that implements 3GPP standardized features. Accordingly, the telecommunications network 2102 may support network slicing to provide different logical networks to different devices that are connected to the telecommunication network 2102. For example, the telecommunications network 2102 may provide Ultra Reliable Low Latency Communication (URLLC) services to some UEs, while providing Enhanced Mobile Broadband (eMBB) services to other UEs, and/or Massive Machine Type Communication (mMTC)/Massive IoT services to yet further UEs.

In some examples, the UEs 2112 are configured to transmit and/or receive information without direct human interaction. For instance, a UE may be designed to transmit information to the access network 2104 on a predetermined schedule, when triggered by an internal or external event, or in response to requests from the access network 2104. Additionally, a UE may be configured for operating in single- or multi-RAT or multi-standard mode. For example, a UE may operate with any one or combination of Wi-Fi, NR (New Radio) and LTE, i.e. being configured for multi-radio dual connectivity (MR-DC), such as E-UTRAN (Evolved-UMTS Terrestrial Radio Access Network) New Radio - Dual Connectivity (EN-DC).

In the example, the hub 2114 communicates with the access network 2104 to facilitate indirect communication between one or more UEs (e.g., UE 2112c and/or 2112d) and network nodes (e.g., network node 2110b). In some examples, the hub 2114 may be a controller, router, content source and analytics, or any of the other communication devices described herein regarding UEs. For example, the hub 2114 may be a broadband router enabling access to the core network 2106 for the UEs. As another example, the hub 2114 may be a controller that sends commands or instructions to one or more actuators in the UEs. Commands or instructions may be received from the UEs, network nodes 2110, or by executable code, script, process, or other instructions in the hub 2114. As another example, the hub 2114 may be a data collector that acts as temporary storage for UE data and, in some embodiments, may perform analysis or other processing of the data. As another example, the hub 2114 may be a content source. For example, for a UE that is a VR headset, display, loudspeaker or other media delivery device, the hub 2114 may retrieve VR assets, video, audio, or other media or data related to sensory information via a network node, which the hub 2114 then provides to the UE either directly, after performing local processing, and/or after adding additional local content. In still another example, the hub 2114 acts as a proxy server or orchestrator for the UEs, in particular in if one or more of the UEs are low energy IoT devices.

The hub 2114 may have a constant/persistent or intermittent connection to the network node 2110b. The hub 2114 may also allow for a different communication scheme and/or schedule between the hub 2114 and UEs (e.g., UE 2112c and/or 2112d), and between the hub 2114 and the core network 2106. In other examples, the hub 2114 is connected to the core network 2106 and/or one or more UEs via a wired connection. Moreover, the hub 2114 may be configured to connect to an M2M service provider over the access network 2104 and/or to another UE over a direct connection. In some scenarios, UEs may establish a wireless connection with the network nodes 2110 while still connected via the hub 2114 via a wired or wireless connection. In some embodiments, the hub 2114 may be a dedicated hub - that is, a hub whose primary function is to route communications to/from the UEs from/to the network node 2110b. In other embodiments, the hub 2114 may be a non-dedicated hub - that is, a device which is capable of operating to route communications between the UEs and network node 2110b, but which is additionally capable of operating as a communication start and/or end point for certain data channels.

**FIG. 22** shows a UE 2200 in accordance with some embodiments. As used herein, a UE refers to a device capable, configured, arranged and/or operable to communicate wirelessly with network nodes and/or other UEs. Examples of a UE include, but are not limited to, a smart phone, mobile phone, cell phone, voice over IP (VoIP) phone, wireless local loop phone, desktop computer, personal digital assistant (PDA), wireless cameras, gaming console or device, music storage device, playback appliance, wearable terminal device, wireless endpoint, mobile station, tablet, laptop, laptop-embedded equipment (LEE), laptop-mounted equipment (LME), smart device, wireless customer-premise equipment (CPE), vehicle-mounted or vehicle embedded/integrated wireless device, etc. Other examples include any UE identified by the 3rd Generation Partnership Project (3GPP), including a narrow band internet of things (NB-IoT) UE, a machine type communication (MTC) UE, and/or an enhanced MTC (eMTC) UE.

A UE may support device-to-device (D2D) communication, for example by implementing a 3GPP standard for sidelink communication, Dedicated Short-Range Communication (DSRC), vehicle-to-vehicle (V2V), vehicle-to-infrastructure (V2I), or vehicle-to-everything (V2X). In other examples, a UE may not necessarily have a user in the sense of a human user who owns and/or operates the relevant device. Instead, a UE may represent a device that is intended for sale to, or operation by, a human user but which may not, or which may not initially, be associated with a specific human user (e.g., a smart sprinkler controller). Alternatively, a UE may represent a device that is not intended for sale to, or operation by, an end user but which may be associated with or operated for the benefit of a user (e.g., a smart power meter).

The UE 2200 includes processing circuitry 2202 that is operatively coupled via a bus 2204 to an input/output interface 2206, a power source 2208, a memory 2210, a communication interface 2212, and/or any other component, or any combination thereof. Certain UEs may utilize all or a subset of the components shown in FIG. 22. The level of integration between the components may vary from one UE to another UE. Further, certain UEs may contain multiple instances of a component, such as multiple processors, memories, transceivers, transmitters, receivers, etc.

The processing circuitry 2202 is configured to process instructions and data and may be configured to implement any sequential state machine operative to execute instructions stored as machine-readable computer programs in the memory 2210. The processing circuitry 2202 may be implemented as one or more hardware-implemented state machines (e.g., in discrete logic, field-programmable gate arrays (FPGAs), application specific integrated circuits (ASICs), etc.); programmable logic together with appropriate firmware; one or more stored computer programs, general-purpose processors, such as a microprocessor or digital signal processor (DSP), together with appropriate software; or any combination of the above. For example, the processing circuitry 2202 may include multiple central processing units (CPUs).

In the example, the input/output interface 2206 may be configured to provide an interface or interfaces to an input device, output device, or one or more input and/or output devices. Examples of an output device include a speaker, a sound card, a video card, a display, a monitor, a printer, an actuator, an emitter, a smartcard, another output device, or any combination thereof. An input device may allow a user to capture information into the UE 2200. Examples of an input device include a touch-sensitive or presence-sensitive display, a camera (e.g., a digital camera, a digital video camera, a web camera, etc.), a microphone, a sensor, a mouse, a trackball, a directional pad, a trackpad, a scroll wheel, a smartcard, and the like. The presence-sensitive display may include a capacitive or resistive touch sensor to sense input from a user. A sensor may be, for instance, an accelerometer, a gyroscope, a tilt sensor, a force sensor, a magnetometer, an optical sensor, a proximity sensor, a biometric sensor, etc., or any combination thereof. An output device may use the same type of interface port as an input device. For example, a Universal Serial Bus (USB) port may be used to provide an input device and an output device.

In some embodiments, the power source 2208 is structured as a battery or battery pack. Other types of power sources, such as an external power source (e.g., an electricity outlet), photovoltaic device, or power cell, may be used. The power source 2208 may further include power circuitry for delivering power from the power source 2208 itself, and/or an external power source, to the various parts of the UE 2200 via input circuitry or an interface such as an electrical power cable. Delivering power may be, for example, for charging of the power source 2208. Power circuitry may perform any formatting, converting, or other modification to the power from the power source 2208 to make the power suitable for the respective components of the UE 2200 to which power is supplied.

The memory 2210 may be or be configured to include memory such as random access memory (RAM), read-only memory (ROM), programmable read-only memory (PROM), erasable programmable read-only memory (EPROM), electrically erasable programmable read-only memory (EEPROM), magnetic disks, optical disks, hard disks, removable cartridges, flash drives, and so forth. In one example, the memory 2210 includes one or more application programs 2214, such as an operating system, web browser application, a widget, gadget engine, or other application, and corresponding data 2216. The memory 2210 may store, for use by the UE 2200, any of a variety of various operating systems or combinations of operating systems.

The memory 2210 may be configured to include a number of physical drive units, such as redundant array of independent disks (RAID), flash memory, USB flash drive, external hard disk drive, thumb drive, pen drive, key drive, high-density digital versatile disc (HD-DVD) optical disc drive, internal hard disk drive, Blu-Ray optical disc drive, holographic digital data storage (HDDS) optical disc drive, external mini-dual in-line memory module (DIMM), synchronous dynamic random access memory (SDRAM), external micro-DIMM SDRAM, smartcard memory such as tamper resistant module in the form of a universal integrated circuit card (UICC) including one or more subscriber identity modules (SIMs), such as a USIM and/or ISIM, other memory, or any combination thereof. The UICC may for example be an embedded UICC (eUICC), integrated UICC (iUICC) or a removable UICC commonly known as 'SIM card.' The memory 2210 may allow the UE 2200 to access instructions, application programs and the like, stored on transitory or non-transitory memory media, to off-load data, or to upload data. An article of manufacture, such as one utilizing a communication system may be tangibly embodied as or in the memory 2210, which may be or comprise a device-readable storage medium.

The processing circuitry 2202 may be configured to communicate with an access network or other network using the communication interface 2212. The communication interface 2212 may comprise one or more communication subsystems and may include or be communicatively coupled to an antenna 2222. The communication interface 2212 may include one or more transceivers used to communicate, such as by communicating with one or more remote transceivers of another device capable of wireless communication (e.g., another UE or a network node in an access network). Each transceiver may include a transmitter 2218 and/or a receiver 2220 appropriate to provide network communications (e.g., optical, electrical, frequency allocations, and so forth). Moreover, the transmitter 2218 and receiver 2220 may be coupled to one or more antennas (e.g., antenna 2222) and may share circuit components, software or firmware, or alternatively be implemented separately.

In the illustrated embodiment, communication functions of the communication interface 2212 may include cellular communication, Wi-Fi communication, LPWAN communication, data communication, voice communication, multimedia communication, short-range communications such as Bluetooth, near-field communication, location-based communication such as the use of the global positioning system (GPS) to determine a location, another like communication function, or any combination thereof. Communications may be implemented in according to one or more communication protocols and/or standards, such as IEEE 802.11, Code Division Multiplexing Access (CDMA), Wideband Code Division Multiple Access (WCDMA), GSM, LTE, New Radio (NR), UMTS, WiMax, Ethernet, transmission control protocol/internet protocol (TCP/IP), synchronous optical networking (SONET), Asynchronous Transfer Mode (ATM), QUIC, Hypertext Transfer Protocol (HTTP), and so forth.

Regardless of the type of sensor, a UE may provide an output of data captured by its sensors, through its communication interface 2212, via a wireless connection to a network node. Data captured by sensors of a UE can be communicated through a wireless connection to a network node via another UE. The output may be periodic (e.g., once every 15 minutes if it reports the sensed temperature), random (e.g., to even out the load from reporting from several sensors), in response to a triggering event (e.g., when moisture is detected an alert is sent), in response to a request (e.g., a user initiated request), or a continuous stream (e.g., a live video feed of a patient).

As another example, a UE comprises an actuator, a motor, or a switch, related to a communication interface configured to receive wireless input from a network node via a wireless connection. In response to the received wireless input the states of the actuator, the motor, or the switch may change. For example, the UE may comprise a motor that adjusts the control surfaces or rotors of a drone in flight according to the received input or to a robotic arm performing a medical procedure according to the received input.

A UE, when in the form of an Internet of Things (IoT) device, may be a device for use in one or more application domains, these domains comprising, but not limited to, city wearable technology, extended industrial application and healthcare. Non-limiting examples of such an IoT device are a device which is or which is embedded in: a connected refrigerator or freezer, a TV, a connected lighting device, an electricity meter, a robot vacuum cleaner, a voice controlled smart speaker, a home security camera, a motion detector, a thermostat, a smoke detector, a door/window sensor, a flood/moisture sensor, an electrical door lock, a connected doorbell, an air conditioning system like a heat pump, an autonomous vehicle, a surveillance system, a weather monitoring device, a vehicle parking monitoring device, an electric vehicle charging station, a smart watch, a fitness tracker, a head-mounted display for Augmented Reality (AR) or Virtual Reality (VR), a wearable for tactile augmentation or sensory enhancement, a water sprinkler, an animal- or item-tracking device, a sensor for monitoring a plant or animal, an industrial robot, an Unmanned Aerial Vehicle (UAV), and any kind of medical device, like a heart rate monitor or a remote controlled surgical robot. A UE in the form of an IoT device comprises circuitry and/or software in dependence of the intended application of the IoT device in addition to other components as described in relation to the UE 2200 shown in FIG. 22.

As yet another specific example, in an IoT scenario, a UE may represent a machine or other device that performs monitoring and/or measurements, and transmits the results of such monitoring and/or measurements to another UE and/or a network node. The UE may in this case be an M2M device, which may in a 3GPP context be referred to as an MTC device. As one particular example, the UE may implement the 3GPP NB-IoT standard. In other scenarios, a UE may represent a vehicle, such as a car, a bus, a truck, a ship and an airplane, or other equipment that is capable of monitoring and/or reporting on its operational status or other functions associated with its operation.

In practice, any number of UEs may be used together with respect to a single use case. For example, a first UE might be or be integrated in a drone and provide the drone's speed information (obtained through a speed sensor) to a second UE that is a remote controller operating the drone. When the user makes changes from the remote controller, the first UE may adjust the throttle on the drone (e.g. by controlling an actuator) to increase or decrease the drone's speed. The first and/or the second UE can also include more than one of the functionalities described above. For example, a UE might comprise the sensor and the actuator, and handle communication of data for both the speed sensor and the actuators.

FIG. 23 shows a network node 2300 in accordance with some embodiments. As used herein, network node refers to equipment capable, configured, arranged and/or operable to communicate directly or indirectly with a UE and/or with other network nodes or equipment, in a telecommunication network. Examples of network nodes include, but are not limited to, access points (APs) (e.g., radio access points), base stations (BSs) (e.g., radio base stations, Node Bs, evolved Node Bs (eNBs) and NR NodeBs (gNBs)).

Base stations may be categorized based on the amount of coverage they provide (or, stated differently, their transmit power level) and so, depending on the provided amount of coverage, may be referred to as femto base stations, pico base stations, micro base stations, or macro base stations. A base station may be a relay node or a relay donor node controlling a relay. A network node may also include one or more (or all) parts of a distributed radio base station such as centralized digital units and/or remote radio units (RRUs), sometimes referred to as Remote Radio Heads (RRHs). Such remote radio units may or may not be integrated with an antenna as an antenna integrated radio. Parts of a distributed radio base station may also be referred to as nodes in a distributed antenna system (DAS).

Other examples of network nodes include multiple transmission point (multi-TRP) 5G access nodes, multi-standard radio (MSR) equipment such as MSR BSs, network controllers such as radio network controllers (RNCs) or base station controllers (BSCs), base transceiver stations (BTSs), transmission points, transmission nodes, multi-cell/multicast coordination entities (MCEs), Operation and Maintenance (O&M) nodes, Operations Support System (OSS) nodes, Self-Organizing Network (SON) nodes, positioning nodes (e.g., Evolved Serving Mobile Location Centers (E-SMLCs)), and/or Minimization of Drive Tests (MDTs).

The network node 2300 includes a processing circuitry 2302, a memory 2304, a communication interface 2306, and a power source 2308. The network node 2300 may be composed of multiple physically separate components (e.g., a NodeB component and a RNC component, or a BTS component and a BSC component, etc.), which may each have their own respective components. In certain scenarios in which the network node 2300 comprises multiple separate components (e.g., BTS and BSC components), one or more of the separate components may be shared among several network nodes. For example, a single RNC may control multiple NodeBs. In such a scenario, each unique NodeB and RNC pair, may in some instances be considered a single separate network node. In some embodiments, the network node 2300 may be configured to support multiple radio access technologies (RATs). In such embodiments, some components may be duplicated (e.g., separate memory 2304 for different RATs) and some components may be reused (e.g., a same antenna 2310 may be shared by different RATs). The network node 2300 may also include multiple sets of the various illustrated components for different wireless technologies integrated into network node 2300, for example GSM, WCDMA, LTE, NR, WiFi, Zigbee, Z-wave, LoRaWAN, Radio Frequency Identification (RFID) or Bluetooth wireless technologies. These wireless technologies may be integrated into the same or different chip or set of chips and other components within network node 2300.

The processing circuitry 2302 may comprise a combination of one or more of a microprocessor, controller, microcontroller, central processing unit, digital signal processor, application-specific integrated circuit, field programmable gate array, or any other suitable computing device, resource, or combination of hardware, software and/or encoded logic operable to provide, either alone or in conjunction with other network node 2300 components, such as the memory 2304, to provide network node 2300 functionality.

In some embodiments, the processing circuitry 2302 includes a system on a chip (SOC). In some embodiments, the processing circuitry 2302 includes one or more of radio frequency (RF) transceiver circuitry 2312 and baseband processing circuitry 2314. In some embodiments, the radio frequency (RF) transceiver circuitry 2312 and the baseband processing circuitry 2314 may be on separate chips (or sets of chips), boards, or units, such as radio units and digital units. In alternative embodiments, part or all of RF transceiver circuitry 2312 and baseband processing circuitry 2314 may be on the same chip or set of chips, boards, or units.

The memory 2304 may comprise any form of volatile or non-volatile computer-readable memory including, without limitation, persistent storage, solid-state memory, remotely mounted memory, magnetic media, optical media, random access memory (RAM), read-only memory (ROM), mass storage media (for example, a hard disk), removable storage media (for example, a flash drive, a Compact Disk (CD) or a Digital Video Disk (DVD)), and/or any other volatile or non-volatile, non-transitory device-readable and/or computer-executable memory devices that store information, data, and/or instructions that may be used by the processing circuitry 2302. The memory 2304 may store any suitable instructions, data, or information, including a computer program, software, an application including one or more of logic, rules, code, tables, and/or other instructions capable of being executed by the processing circuitry 2302 and utilized by the network node 2300. The memory 2304 may be used to store any calculations made by the processing circuitry 2302 and/or any data received via the communication interface 2306. In some embodiments, the processing circuitry 2302 and memory 2304 is integrated.

The communication interface 2306 is used in wired or wireless communication of signaling and/or data between a network node, access network, and/or UE. As illustrated, the communication interface 2306 comprises port(s)/terminal(s) 2316 to send and receive data, for example to and from a network over a wired connection. The communication interface 2306 also includes radio front-end circuitry 2318 that may be coupled to, or in certain embodiments a part of, the antenna 2310. Radio front-end circuitry 2318 comprises filters 2320 and amplifiers 2322. The radio front-end circuitry 2318 may be connected to an antenna 2310 and processing circuitry 2302. The radio front-end circuitry may be configured to condition signals communicated between antenna 2310 and processing circuitry 2302. The radio front-end circuitry 2318 may receive digital data that is to be sent out to other network nodes or UEs via a wireless connection. The radio front-end circuitry 2318 may convert the digital data into a radio signal having the appropriate channel and bandwidth parameters using a combination of filters 2320 and/or amplifiers 2322. The radio signal may then be transmitted via the antenna 2310. Similarly, when receiving data, the antenna 2310 may collect radio signals which are then converted into digital data by the radio front-end circuitry 2318. The digital data may be passed to the processing circuitry 2302. In other embodiments, the communication interface may comprise different components and/or different combinations of components.

In certain alternative embodiments, the network node 2300 does not include separate radio front-end circuitry 2318, instead, the processing circuitry 2302 includes radio front-end circuitry and is connected to the antenna 2310. Similarly, in some embodiments, all or some of the RF transceiver circuitry 2312 is part of the communication interface 2306. In still other embodiments, the communication interface 2306 includes one or more ports or terminals 2316, the radio front-end circuitry 2318, and the RF transceiver circuitry 2312, as part of a radio unit (not shown), and the communication interface 2306 communicates with the baseband processing circuitry 2314, which is part of a digital unit (not shown).

The antenna 2310 may include one or more antennas, or antenna arrays, configured to send and/or receive wireless signals. The antenna 2310 may be coupled to the radio front-end circuitry 2318 and may be any type of antenna capable of transmitting and receiving data and/or signals wirelessly. In certain embodiments, the antenna 2310 is separate from the network node 2300 and connectable to the network node 2300 through an interface or port.

The antenna 2310, communication interface 2306, and/or the processing circuitry 2302 may be configured to perform any receiving operations and/or certain obtaining operations described herein as being performed by the network node. Any information, data and/or signals may be received from a UE, another network node and/or any other network equipment. Similarly, the antenna 2310, the communication interface 2306, and/or the processing circuitry 2302 may be configured to perform any transmitting operations described herein as being performed by the network node. Any information, data and/or signals may be transmitted to a UE, another network node and/or any other network equipment.

The power source 2308 provides power to the various components of network node 2300 in a form suitable for the respective components (e.g., at a voltage and current level needed for each respective component). The power source 2308 may further comprise, or be coupled to, power management circuitry to supply the components of the network node 2300 with power for performing the functionality described herein. For example, the network node 2300 may be connectable to an external power source (e.g., the power grid, an electricity outlet) via an input circuitry or interface such as an electrical cable, whereby the external power source supplies power to power circuitry of the power source 2308. As a further example, the power source 2308 may comprise a source of power in the form of a battery or battery pack which is connected to, or integrated in, power circuitry. The battery may provide backup power should the external power source fail.

Embodiments of the network node 2300 may include additional components beyond those shown in FIG. 23 for providing certain aspects of the network node's functionality, including any of the functionality described herein and/or any functionality necessary to support the subject matter described herein. For example, the network node 2300 may include user interface equipment to allow input of information into the network node 2300 and to allow output of information from the network node 2300. This may allow a user to perform diagnostic, maintenance, repair, and other administrative functions for the network node 2300.

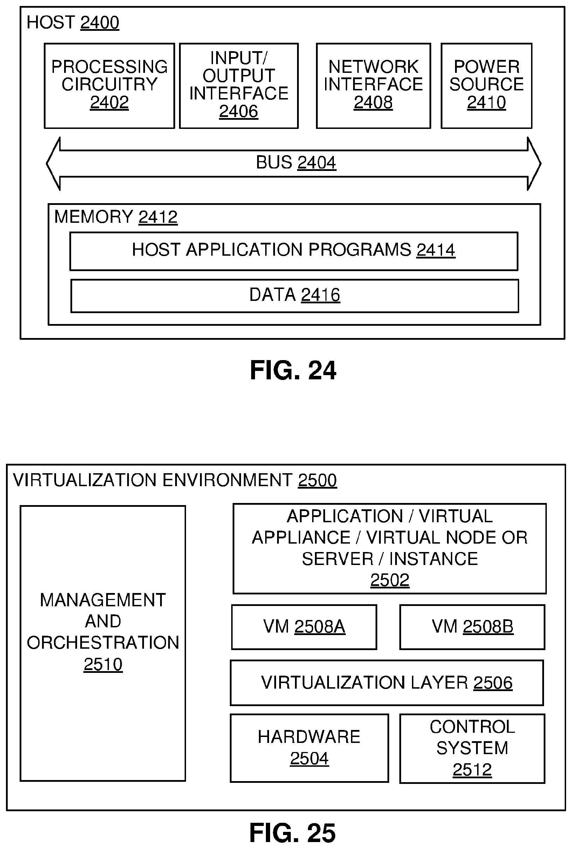

**FIG. 24** is a block diagram of a host 2400, which may be an embodiment of the host 2116 of FIG. 21, in accordance with various aspects described herein. As used herein, the host 2400 may be or comprise various combinations hardware and/or software, including a standalone server, a blade server, a cloud-implemented server, a distributed server, a virtual machine, container, or processing resources in a server farm. The host 2400 may provide one or more services to one or more UEs.

The host 2400 includes processing circuitry 2402 that is operatively coupled via a bus 2404 to an input/output interface 2406, a network interface 2408, a power source 2410, and a memory 2412. Other components may be included in other embodiments. Features of these components may be substantially similar to those described with respect to the devices of previous figures, such as Figures 22 and 23, such that the descriptions thereof are generally applicable to the corresponding components of host 2400.

The memory 2412 may include one or more computer programs including one or more host application programs 2414 and data 2416, which may include user data, e.g., data generated by a UE for the host 2400 or data generated by the host 2400 for a UE. Embodiments of the host 2400 may utilize only a subset or all of the components shown. The host application programs 2414 may be implemented in a container-based architecture and may provide support for video codecs (e.g., Versatile Video Coding (VVC), High Efficiency Video Coding (HEVC), Advanced Video Coding (AVC), MPEG, VP9) and audio codecs (e.g., FLAC, Advanced Audio Coding (AAC), MPEG, G.711), including transcoding for multiple different classes, types, or implementations of UEs (e.g., handsets, desktop computers, wearable display systems, heads-up display systems). The host application programs 2414 may also provide for user authentication and licensing checks and may periodically report health, routes, and content availability to a central node, such as a device in or on the edge of a core network. Accordingly, the host 2400 may select and/or indicate a different host for over-the-top services for a UE. The host application programs 2414 may support various protocols, such as the HTTP Live Streaming (HLS) protocol, Real-Time Messaging Protocol (RTMP), Real-Time Streaming Protocol (RTSP), Dynamic Adaptive Streaming over HTTP (MPEG-DASH), etc.

**FIG. 25** is a block diagram illustrating a virtualization environment 2500 in which functions implemented by some embodiments may be virtualized. In the present context, virtualizing means creating virtual versions of apparatuses or devices which may include virtualizing hardware platforms, storage devices and networking resources. As used herein, virtualization can be applied to any device described herein, or components thereof, and relates to an implementation in which at least a portion of the functionality is implemented as one or more virtual components. Some or all of the functions described herein may be implemented as virtual components executed by one or more virtual machines (VMs) implemented in one or more virtual environments 2500 hosted by one or more of hardware nodes, such as a hardware computing device that operates as a network node, UE, core network node, or host. Further, in embodiments in which the virtual node does not require radio connectivity (e.g., a core network node or host), then the node may be entirely virtualized.

Applications 2502 (which may alternatively be called software instances, virtual appliances, network functions, virtual nodes, virtual network functions, etc.) are run in the virtualization environment Q400 to implement some of the features, functions, and/or benefits of some of the embodiments disclosed herein.

Hardware 2504 includes processing circuitry, memory that stores software and/or instructions executable by hardware processing circuitry, and/or other hardware devices as described herein, such as a network interface, input/output interface, and so forth. Software may be executed by the processing circuitry to instantiate one or more virtualization layers 2506 (also referred to as hypervisors or virtual machine monitors (VMMs)), provide VMs 2508a and 2508b (one or more of which may be generally referred to as VMs 2508), and/or perform any of the functions, features and/or benefits described in relation with some embodiments described herein. The virtualization layer 2506 may present a virtual operating platform that appears like networking hardware to the VMs 2508.

The VMs 2508 comprise virtual processing, virtual memory, virtual networking or interface and virtual storage, and may be run by a corresponding virtualization layer 2506. Different embodiments of the instance of a virtual appliance 2502 may be implemented on one or more of VMs 2508, and the implementations may be made in different ways. Virtualization of the hardware is in some contexts referred to as network function virtualization (NFV). NFV may be used to consolidate many network equipment types onto industry standard high volume server hardware, physical switches, and physical storage, which can be located in data centers, and customer premise equipment.

In the context of NFV, a VM 2508 may be a software implementation of a physical machine that runs programs as if they were executing on a physical, non-virtualized machine. Each of the VMs 2508, and that part of hardware 2504 that executes that VM, be it hardware dedicated to that VM and/or hardware shared by that VM with others of the VMs, forms separate virtual network elements. Still in the context of NFV, a virtual network function is responsible for handling specific network functions that run in one or more VMs 2508 on top of the hardware 2504 and corresponds to the application 2502.

Hardware 2504 may be implemented in a standalone network node with generic or specific components. Hardware 2504 may implement some functions via virtualization. Alternatively, hardware 2504 may be part of a larger cluster of hardware (e.g. such as in a data center or CPE) where many hardware nodes work together and are managed via management and orchestration 2510, which, among others, oversees lifecycle management of applications 2502. In some embodiments, hardware 2504 is coupled to one or more radio units that each include one or more transmitters and one or more receivers that may be coupled to one or more antennas. Radio units may communicate directly with other hardware nodes via one or more appropriate network interfaces and may be used in combination with the virtual components to provide a virtual node with radio capabilities, such as a radio access node or a base station. In some embodiments, some signaling can be provided with the use of a control system 2512 which may alternatively be used for communication between hardware nodes and radio units.

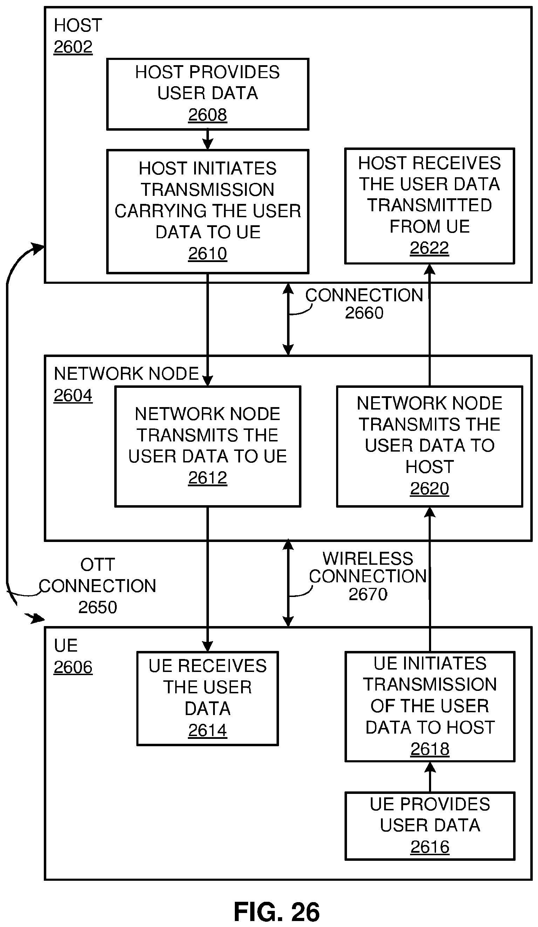

**FIG. 26** shows a communication diagram of a host 2602 communicating via a network node 2604 with a UE 2606 over a partially wireless connection in accordance with some embodiments. Example implementations, in accordance with various embodiments, of the UE (such as a UE 2112a of FIG. 21 and/or UE 2200 of FIG. 22), network node (such as network node 2110a of FIG. 21 and/or network node 2300 of FIG. 23), and host (such as host 2116 of FIG. 21 and/or host 2400 of FIG. 24) discussed in the preceding paragraphs will now be described with reference to FIG. 26.

Like host 2400, embodiments of host 2602 include hardware, such as a communication interface, processing circuitry, and memory. The host 2602 also includes software, which is stored in or accessible by the host 2602 and executable by the processing circuitry. The software includes a host application that may be operable to provide a service to a remote user, such as the UE 2606 connecting via an over-the-top (OTT) connection 2650 extending between the UE 2606 and host 2602. In providing the service to the remote user, a host application may provide user data which is transmitted using the OTT connection 2650.

The network node 2604 includes hardware enabling it to communicate with the host 2602 and UE 2606. The connection 2660 may be direct or pass through a core network (like core network 2106 of FIG. 21) and/or one or more other intermediate networks, such as one or more public, private, or hosted networks. For example, an intermediate network may be a backbone network or the Internet.

The UE 2606 includes hardware and software, which is stored in or accessible by UE 2606 and executable by the UE's processing circuitry. The software includes a client application, such as a web browser or operator-specific "app" that may be operable to provide a service to a human or non-human user via UE 2606 with the support of the host 2602. In the host 2602, an executing host application may communicate with the executing client application via the OTT connection 2650 terminating at the UE 2606 and host 2602. In providing the service to the user, the UE's client application may receive request data from the host's host application and provide user data in response to the request data. The OTT connection 2650 may transfer both the request data and the user data. The UE's client application may interact with the user to generate the user data that it provides to the host application through the OTT connection 2650.

The OTT connection 2650 may extend via a connection 2660 between the host 2602 and the network node 2604 and via a wireless connection 2670 between the network node 2604 and the UE 2606 to provide the connection between the host 2602 and the UE 2606. The connection 2660 and wireless connection 2670, over which the OTT connection 2650 may be provided, have been drawn abstractly to illustrate the communication between the host 2602 and the UE 2606 via the network node 2604, without explicit reference to any intermediary devices and the precise routing of messages via these devices.

As an example of transmitting data via the OTT connection 2650, in step 2608, the host 2602 provides user data, which may be performed by executing a host application. In some embodiments, the user data is associated with a particular human user interacting with the UE 2606. In other embodiments, the user data is associated with a UE 2606 that shares data with the host 2602 without explicit human interaction. In step 2610, the host 2602 initiates a transmission carrying the user data towards the UE 2606. The host 2602 may initiate the transmission responsive to a request transmitted by the UE 2606. The request may be caused by human interaction with the UE 2606 or by operation of the client application executing on the UE 2606. The transmission may pass via the network node 2604, in accordance with the teachings of the embodiments described throughout this disclosure. Accordingly, in step 2612, the network node 2604 transmits to the UE 2606 the user data that was carried in the transmission that the host 2602 initiated, in accordance with the teachings of the embodiments described throughout this disclosure. In step 2614, the UE 2606 receives the user data carried in the transmission, which may be performed by a client application executed on the UE 2606 associated with the host application executed by the host 2602.

In some examples, the UE 2606 executes a client application which provides user data to the host 2602. The user data may be provided in reaction or response to the data received from the host 2602. Accordingly, in step 2616, the UE 2606 may provide user data, which may be performed by executing the client application. In providing the user data, the client application may further consider user input received from the user via an input/output interface of the UE 2606. Regardless of the specific manner in which the user data was provided, the UE 2606 initiates, in step 2618, transmission of the user data towards the host 2602 via the network node 2604. In step 2620, in accordance with the teachings of the embodiments described throughout this disclosure, the network node 2604 receives user data from the UE 2606 and initiates transmission of the received user data towards the host 2602. In step 2622, the host 2602 receives the user data carried in the transmission initiated by the UE 2606.

One or more of the various embodiments improve the performance of OTT services provided to the UE 2606 using the OTT connection 2650, in which the wireless connection 2670 forms the last segment. More precisely, the teachings of these embodiments may reduce latency and thereby provide benefits such as improving end user performance and reducing buffering and memory requirements of a DU.

In an example scenario, factory status information may be collected and analyzed by the host 2602. As another example, the host 2602 may process audio and video data which may have been retrieved from a UE for use in creating maps. As another example, the host 2602 may collect and analyze real-time data to assist in controlling vehicle congestion (e.g., controlling traffic lights). As another example, the host 2602 may store surveillance video uploaded by a UE. As another example, the host 2602 may store or control access to media content such as video, audio, VR or AR which it can broadcast, multicast or unicast to UEs. As other examples, the host 2602 may be used for energy pricing, remote control of non-time critical electrical load to balance power generation needs, location services, presentation services (such as compiling diagrams etc. from data collected from remote devices), or any other function of collecting, retrieving, storing, analyzing and/or transmitting data.

In some examples, a measurement procedure may be provided for the purpose of monitoring data rate, latency and other factors on which the one or more embodiments improve. There may further be an optional network functionality for reconfiguring the OTT connection 2650 between the host 2602 and UE 2606, in response to variations in the measurement results. The measurement procedure and/or the network functionality for reconfiguring the OTT connection may be implemented in software and hardware of the host 2602 and/or UE 2606. In some embodiments, sensors (not shown) may be deployed in or in association with other devices through which the OTT connection 2650 passes; the sensors may participate in the measurement procedure by supplying values of the monitored quantities exemplified above, or supplying values of other physical quantities from which software may compute or estimate the monitored quantities. The reconfiguring of the OTT connection 2650 may include message format, retransmission settings, preferred routing etc.; the reconfiguring need not directly alter the operation of the network node 2604. Such procedures and functionalities may be known and practiced in the art. In certain embodiments, measurements may involve proprietary UE signaling that facilitates measurements of throughput, propagation times, latency and the like, by the host 2602. The measurements may be implemented in that software causes messages to be transmitted, in particular empty or 'dummy' messages, using the OTT connection 2650 while monitoring propagation times, errors, etc.

Although the computing devices described herein (e.g., UEs, network nodes, hosts) may include the illustrated combination of hardware components, other embodiments may comprise computing devices with different combinations of components. It is to be understood that these computing devices may comprise any suitable combination of hardware and/or software needed to perform the tasks, features, functions and methods disclosed herein. Determining, calculating, obtaining or similar operations described herein may be performed by processing circuitry, which may process information by, for example, converting the obtained information into other information, comparing the obtained information or converted information to information stored in the network node, and/or performing one or more operations based on the obtained information or converted information, and as a result of said processing making a determination. Moreover, while components are depicted as single boxes located within a larger box, or nested within multiple boxes, in practice, computing devices may comprise multiple different physical components that make up a single illustrated component, and functionality may be partitioned between separate components. For example, a communication interface may be configured to include any of the components described herein, and/or the functionality of the components may be partitioned between the processing circuitry and the communication interface. In another example, non-computationally intensive functions of any of such components may be implemented in software or firmware and computationally intensive functions may be implemented in hardware.

In certain embodiments, some or all of the functionality described herein may be provided by processing circuitry executing instructions stored on in memory, which in certain embodiments may be a computer program product in the form of a non-transitory computer-readable storage medium. In alternative embodiments, some or all of the functionality may be provided by the processing circuitry without executing instructions stored on a separate or discrete device-readable storage medium, such as in a hard-wired manner. In any of those particular embodiments, whether executing instructions stored on a non-transitory computer-readable storage medium or not, the processing circuitry can be configured to perform the described functionality. The benefits provided by such functionality are not limited to the processing circuitry alone or to other components of the computing device, but are enjoyed by the computing device as a whole, and/or by end users and a wireless network generally.

## Claims

1. A method for prioritizing transmission of data from a first network node to a second network node via a fronthaul interface, the method performed by the first network node in a communications network that includes the second network node communicatively coupled to the first network node via the fronthaul interface and includes a communication device communicatively coupled to the first network node, the method comprising:
determining (810) physical uplink shared channel, PUSCH, frequency-domain in-phase and quadrature, IQ, data associated with an uplink signal received from the communication device, the IQ data including IQ data of demodulation reference signal, DMRS, symbols and IQ data of user data symbols,
obtaining (820) frequency-domain beamforming weights,
generating (1230, 1330) beamformed IQ data of DMRS symbols and beamformed IQ data of user data symbols by performing beamforming on the IQ data of the DMRS symbols and the IQ data of the user data symbols based on the frequency-domain beamforming weights,
generating (830) first data associated with the uplink signal, wherein the first data comprises the beamformed IQ data of the DMRS symbols,
generating (840) second data associated with the uplink signal; wherein the second data comprises beamformed IQ data of the user data symbols; and
prioritizing (850, 860) transmission of the first data to the second network node via the fronthaul interface over transmission of the second data to the second network node via the fronthaul interface.

2. The method of claim 1, wherein obtaining the frequency-domain beamforming weights comprises:
extracting (1520) the IQ data of the DMRS symbols;
determining (1520) channel estimates by performing channel estimation based on the DMRS symbols; and
calculating (1520) the frequency-domain beamforming weights,
the method further comprising:
generating (1530) beamformed IQ data of the user data symbols by performing beamforming on the IQ data of the user data symbols using the frequency-domain beamforming weights,
wherein the first data comprises an indication of the frequency-domain beamforming weights and an indication of the channel estimates.

3. The method of claim 1, wherein obtaining the frequency-domain beamforming weights comprises:
extracting (1820) the IQ data of the DMRS symbols;
determining (1820) channel estimates by performing channel estimation based on the DMRS symbols;
calculating (1820) the frequency-domain beamforming weights; and
calculating (1820) equalizer weights,
the method further comprising:
generating (1830) the beamformed IQ data of the user data symbols by performing beamforming and equalization on the IQ data of the user data symbols using the frequency-domain beamforming weights and the equalizer weights,
wherein the first data comprises an indication of information regarding the equalizer.

4. The method of any preceding claim, wherein prioritizing the transmission of the first data over the transmission of the second data comprises:
responsive to generating the first data and generating the second data, transmitting (850) the first data to the second network node; and
responsive to transmitting the first data to the second network node, transmitting (860) the second data to the second network node.

5. The method of any preceding claim, wherein the first network node comprises a radio unit, RU, and
wherein the second network node comprises at least one of: a baseband unit, BBU, and a distributed unit, DU.

6. A method performed by a first network node in a communications network that includes a second network node communicatively coupled to the first network node via a fronthaul interface and includes a communication device communicatively coupled to the second network node, the method comprising:
receiving (910) first data from the second network node via the fronthaul interface, the first data associated with an uplink signal received from the communication device;
responsive to receiving the first data, receiving (920) second data from the second network node via the fronthaul interface, the second data associated with the uplink signal received from the communication device;
determining (930) processed second data by processing the second data based on the first data; and
processing (940) the processed second data to decode information bits included in the second data,
wherein the first data comprises beamformed frequency-domain in-phase and quadrature, IQ, data of demodulation reference signal, DMRS, symbols associated with the uplink signal from the second network node,
wherein the second data comprises IQ data of user data symbols associated with the uplink signal,
the method further comprising:
performing (1420) channel estimation based on the beamformed frequency-domain IQ data of the DMRS symbols; and
calculating (1420) frequency-domain beamforming weights,
wherein determining the processed second data comprises performing (1440) beamforming on the IQ data of the user data symbols, and
wherein processing the processed second data comprises performing (1450) layer-demapping, demodulation, and decoding of the processed second data.

7. The method of Claim 6 wherein determining the processed second data comprises performing (1440) equalization on the IQ data of the user data symbols.

8. The method of Claim 6, wherein the first data comprises an indication of frequency-domain beamforming weights and an indication of channel estimates,
wherein the second data comprises beamformed frequency-domain in-phase and quadrature, IQ, data of user data symbols associated with the uplink signal,
the method further comprising:
calculating (1620) equalization weights based on the indication of the frequency-domain beamforming weights and the indication of the channel estimates,
wherein determining the processed second data comprises performing (1640) equalization on the IQ data of the user data symbols, and
wherein processing the processed second data comprises performing (1650) layer-demapping, demodulation, and decoding of the processed second data.

9. The method of Claim 6, wherein the first data comprises information associated with an equalizer of the second network node,
wherein the second data comprises beamformed frequency-domain in-phase and quadrature, IQ, data of equalized user data symbols associated with the uplink signal from the second network node,
wherein determining the processed second data comprises performing (1930) layer demapping and demodulating the beamformed frequency-domain IQ data of the equalized user data symbols based on the information associated with the equalizer of the second network node, and
wherein processing the processed second data comprises performing (1940) decoding of the processed second data.

10. The method of Claim 9, wherein the information comprises an indication of the equalizer weights, frequency-domain beamforming weights, and the channel estimates.

11. The method of any of Claims 6-10, wherein the first network node comprises at least one of: a baseband unit, BBU, and a distributed unit, DU, and
wherein the second network node comprises a radio unit, RU.

12. A first network node (360, 2300) in a communications network, the first network node adapted to perform operations comprising the operations of any of the Claims 1-11.

13. A computer program comprising program code to be executed by processing circuitry (2302) of a first network node (360, 2300) in a communications network, whereby execution of the program code causes the first network node to perform operations comprising the operations of any of the Claims 1-11.

14. A system comprising a distributed Unit, DU, adapted to perform the method of any of the Claims 6-11 and a Radio Unit, RU, adapted to perform the method of any of the Claims 1-5, the DU and the RU being connected to each other via a fronthaul interface.

## Patentansprüche

1. Verfahren zur Priorisierung der Übertragung von Daten von einem ersten Netzwerkknoten über eine Fronthaul-Schnittstelle an einen zweiten Netzwerkknoten, wobei das Verfahren von dem ersten Netzwerkknoten in einem Kommunikationsnetzwerk durchgeführt wird, das den zweiten Netzwerkknoten umfasst, der über die Fronthaul-Schnittstelle kommunikativ mit dem ersten Netzwerkknoten gekoppelt ist und eine Kommunikationsvorrichtung umfasst, die kommunikativ mit dem ersten Netzwerkknoten gekoppelt ist, wobei das Verfahren Folgendes umfasst:
Bestimmen (810) von Frequenzdomänen-Inphase- und -Quadraturdaten, Frequenzdomänen-IQ-Daten, eines gemeinsamen physikalischen Uplink-Kanals, PUSCH, die mit einem Uplink-Signal assoziiert sind, das von der Kommunikationsvorrichtung empfangen wird, wobei die IQ-Daten IQ-Daten von Demodulationsreferenzsignalsymbolen, DMRS-Symbolen, und IQ-Daten von Benutzerdatensymbolen umfassen,
Erhalten (820) von Frequenzdomänen-Strahlformungsgewichten,
Erzeugen (1230, 1330) von strahlgeformten IQ-Daten von DMRS-Symbolen und strahlgeformten IQ-Daten von Benutzerdatensymbolen durch Durchführen von Strahlformung an den IQ-Daten der DMRS-Symbole und den IQ-Daten der Benutzerdatensymbole basierend auf den Frequenzdomänen-Strahlformungsgewichten,
Erzeugen (830) von ersten Daten, die mit dem Uplink-Signal assoziiert sind, wobei die ersten Daten die strahlgeformten Daten der DMRS-Symbole umfassen, Erzeugen (840) von zweiten Daten, die mit dem Uplink-Signal assoziiert sind, wobei die zweiten Daten strahlgeformte Daten der Benutzer-Symbole umfassen; und
Priorisieren (850, 860) der Übertragung der ersten Daten an den zweiten Netzwerkknoten über die Fronthaul-Schnittstelle gegenüber den zweiten Daten an den Netzwerkknoten über die Fronthaul-Schnittstelle.

2. Verfahren nach Anspruch 1, wobei das Erhalten der Frequenzdomänen-Strahlformungsgewichte ferner Folgendes umfasst:
Extrahieren (1520) der IQ-Daten der DMRS-Symbole;
Bestimmen (1520) von Kanalschätzungen durch Durchführen von Kanalschätzung basierend auf den DMRS-Symbolen; und
Berechnen (1520) der Frequenzdomänen-Strahlformungsgewichte,
wobei das Verfahren ferner Folgendes umfasst:
Erzeugen (1530) von strahlgeformten IQ-Daten der Benutzerdatensymbole durch Durchführen von Strahlformung an den IQ-Daten der Benutzerdatensymbole unter Verwendung der Frequenzdomänen-Strahlformungsgewichte,
wobei die ersten Daten eine Angabe der Frequenzdomänen-Strahlformungsgewichte und eine Angabe der Kanalschätzungen umfassen.

3. Verfahren nach Anspruch 1, wobei das Erhalten der Frequenzdomänen-Strahlformungsgewichte ferner Folgendes umfasst:
Extrahieren (1820) der IQ-Daten der DMRS-Symbole;
Bestimmen (1820) von Kanalschätzungen durch Durchführen von Kanalschätzung basierend auf den DMRS-Symbolen;
Berechnen (1820) der Frequenzdomänen-Strahlformungsgewichte; und
Berechnen (1820) von Entzerrergewichten,
wobei das Verfahren ferner Folgendes umfasst:
Erzeugen (1830) der strahlgeformten IQ-Daten der Benutzerdatensymbole durch Durchführen von Strahlformung und Entzerrung an den IQ-Daten der Benutzerdatensymbole unter Verwendung der Frequenzdomänen-Strahlformungsgewichte und der Entzerrergewichte,
wobei die ersten Daten eine Angabe von Informationen hinsichtlich des Entzerrers umfassen.

4. Verfahren nach einem der vorhergehenden Ansprüche, wobei das Priorisieren der Übertragung der ersten Daten gegenüber der Übertragung der zweiten Daten Folgendes umfasst:
in Reaktion auf das Erzeugen der ersten Daten und Erzeugen der zweiten Daten Senden (850) der ersten Daten an den zweiten Netzwerkknoten; und
in Reaktion auf das Senden der ersten Daten an den zweiten Netzwerkknoten Senden (860) der zweiten Daten an den zweiten Netzwerkknoten.

5. Verfahren nach einem der vorhergehenden Ansprüche, wobei der erste Netzwerkknoten eine Funkeinheit, RU, umfasst und
wobei der zweite Netzwerkknoten mindestens eines von einer Basisbandeinheit, BBU, und einer verteilten Einheit, DU, umfasst.

6. Verfahren, das von einem ersten Netzwerkknoten in einem Kommunikationsnetzwerk durchgeführt wird, das einen zweiten Netzwerkknoten umfasst, der über eine Fronthaul-Schnittstelle kommunikativ mit dem ersten Netzwerkknoten gekoppelt ist und eine Kommunikationsvorrichtung umfasst, die kommunikativ mit dem ersten Netzwerkknoten gekoppelt ist, wobei das Verfahren Folgendes umfasst:
Empfangen (910) von ersten Daten von dem zweiten Netzwerkknoten über die Fronthaul-Schnittstelle, wobei die ersten Daten mit einem Uplink-Signal assoziiert sind, das von der Kommunikationsvorrichtung empfangen wird;
in Reaktion auf das Empfangen der ersten Daten Empfangen (920) von zweiten Daten von dem zweiten Netzwerkknoten über die Fronthaul-Schnittstelle, wobei die zweiten Daten mit dem Uplink-Signal assoziiert sind, das von der Kommunikationsvorrichtung empfangen wird;
Bestimmen (930) von verarbeiteten zweiten Daten durch Verarbeiten der zweiten Daten basierend auf den ersten Daten und
Verarbeiten (940) der verarbeiteten zweiten Daten, um Informationsbits zu decodieren, die in den zweiten Daten umfasst sind,
wobei die ersten Daten strahlgeformte Frequenzdomänen-Inphase- und -Quadraturdaten, Frequenzdomänen-IQ-Daten, von Demodulationsreferenzsignalsymbolen, DMRS-Symbolen, umfassen, die mit dem Uplink-Signal von dem zweiten Netzwerkknoten assoziiert sind,
wobei die zweiten Daten IQ-Daten von Benutzerdatensymbolen umfassen, die mit dem Uplink-Signal assoziiert sind,
wobei das Verfahren ferner Folgendes umfasst:
Durchführen (1420) von Kanalschätzung basierend auf den strahlgeformten Frequenzdomänen-IQ-Daten der DMRS-Symbole; und
Berechnen (1420) von Frequenzdomänen-Strahlformungsgewichten,
wobei das Bestimmen der verarbeiteten zweiten Daten Durchführen (1440) von Strahlformung an den IQ-Daten der Benutzerdatensymbole umfasst, und
wobei das Verarbeiten der verarbeiteten zweiten Daten Durchführen (1450) von Schichten-Rückabbildung, Demodulation und Decodierung der verarbeiten zweiten Daten umfasst.

7. Verfahren nach Anspruch 6, wobei das Bestimmen der verarbeiteten zweiten Daten Durchführen (1440) von Entzerrung an den IQ-Daten der Benutzerdatensymbole umfasst.

8. Verfahren nach Anspruch 6, wobei die ersten Daten eine Angabe von Frequenzdomänen-Strahlformungsgewichten und eine Angabe von Kanalschätzungen umfassen,
wobei die zweiten Daten strahlgeformte Frequenzdomänen-IQ- und -Quadraturdaten, Frequenzdomänen-IQ-Daten, von Benutzerdatensymbolen umfassen, die mit dem Uplink-Signal assoziiert sind,
wobei das Verfahren ferner Folgendes umfasst:
Berechnen (1620) von Entzerrungsgewichten basierend auf der Angabe der Frequenzdomänen-Strahlformungsgewichte und der Angabe der Kanalschätzungen,
wobei das Bestimmen der verarbeiteten zweiten Daten Durchführen (1640) von Entzerrung an den IQ-Daten der Benutzerdatensymbole umfasst, und
wobei das Verarbeiten der verarbeiteten zweiten Daten Durchführen (1650) von Schichten-Rückabbildung, Demodulation und Decodierung der verarbeiten zweiten Daten umfasst.

9. Verfahren nach Anspruch 6, wobei die ersten Daten Informationen umfassen, die mit einem Entzerrer des zweiten Netzwerkknotens assoziiert sind,
wobei die zweiten Daten strahlgeformte Frequenzdomänen-Inphase- und -Quadraturdaten, Frequenzdomänen-IQ-Daten, von entzerrten Benutzerdatensymbolen umfassen, die mit dem Uplink-Signal von dem zweiten Netzwerkknoten assoziiert sind,
wobei das Bestimmen der verarbeiteten zweiten Daten Durchführen (1930) von Schichten-Rückabbildung und Demodulieren der strahlgeformten Frequenzdomänen-IQ-Daten der entzerrten Benutzerdatensymbole basierend auf den Informationen umfasst, die mit dem Entzerrer des zweiten Netzwerkknotens assoziiert sind, und
wobei das Verarbeiten der verarbeiteten zweiten Daten Durchführen (1940) von Decodierung der verarbeiten zweiten Daten umfasst.

10. Verfahren nach Anspruch 9, wobei die Informationen eine Angabe der Entzerrergewichte, der Frequenzdomänen-Strahlformungsgewichte und der Kanalschätzungen umfassen.

11. Verfahren nach einem der Ansprüche 6-10, wobei der erste Netzwerkknoten mindestens eines von einer Basisbandeinheit, BBU, und einer verteilten Einheit, DU, umfasst, und
wobei der zweite Netzwerkknoten eine Funkeinheit, RU, umfasst.

12. Erster Netzwerkknoten (360, 2300) in einem Kommunikationsnetzwerk, wobei der erste Netzwerkknoten zum Durchführen von Operationen ausgelegt ist, die die Operationen nach einem der Ansprüche 1-11 umfassen.

13. Computerprogramm, umfassend Programmcode, der von Verarbeitungsschaltungsanordnung (2302) eines ersten Netzwerkknotens (360, 2300) in einem Kommunikationsnetzwerk ausgeführt werden soll, wobei die Ausführung des Programmcodes den ersten Netzwerkknoten zum Durchführen von Operationen veranlasst, die die Operationen nach einem der Ansprüche oder 1-11 umfassen.

14. System, umfassend eine verteilte Einheit, DU, die zum Durchführen des Verfahrens nach einem der Ansprüche 6-11 ausgelegt ist, und eine Funkeinheit, RU, die zum Durchführen des Verfahrens nach einem der Ansprüche 1-5 ausgelegt ist, wobei die DU und die RU über eine Fronthaul-Schnittstelle miteinander verbunden sind.

## Revendications

1. Procédé de priorisation de transmission de données d'un premier nœud de réseau à un deuxième nœud de réseau via une interface fronthaul, le procédé étant réalisé par le premier nœud de réseau dans un réseau de communication qui inclut le deuxième nœud de réseau couplé en communication au premier nœud de réseau via l'interface fronthaul et inclut un dispositif de communication couplé en communication au premier nœud de réseau, le procédé comprenant :
la détermination (810) de données en phase et en quadrature, IQ, dans le domaine fréquentiel de canal partagé de liaison montante physique, PUSCH, associées à un signal de liaison montante reçu depuis le dispositif de communication, les données IQ incluant des données IQ de symboles de signal de référence de démodulation, DMRS, et des données IQ de symboles de données utilisateur,
l'obtention (820) de poids de formation de faisceau dans le domaine fréquentiel,
la génération (1230, 1330) de données IQ formées en faisceau de symboles DMRS et de données IQ formées en faisceau de symboles de données utilisateur par la réalisation d'une formation de faisceau sur les données IQ des symboles DMRS et les données IQ des symboles de données utilisateur sur la base des poids de formation de faisceau dans le domaine fréquentiel,
la génération (830) de premières données associées au signal de liaison montante, dans lequel les premières données comprennent les données IQ formées en faisceau des symboles DMRS,
la génération (840) de deuxièmes données associées au signal de liaison montante ; dans lequel les deuxièmes données comprennent des données IQ formées en faisceau des symboles de données utilisateur ; et
la priorisation (850, 860) d'une transmission des premières données au deuxième nœud de réseau via l'interface fronthaul par rapport à une transmission des deuxièmes données au deuxième nœud de réseau via l'interface fronthaul.

2. Procédé selon la revendication 1, dans lequel l'obtention des poids de formation de faisceau dans le domaine fréquentiel comprend :
l'extraction (1520) des données IQ des symboles DMRS ;
la détermination (1520) d'estimations de canal par la réalisation d'une estimation de canal sur la base des symboles DMRS ; et
le calcul (1520) des poids de formation de faisceau dans le domaine fréquentiel,
le procédé comprenant en outre :
la génération (1530) de données IQ formées en faisceau des symboles de données utilisateur par la réalisation d'une formation de faisceau sur les données IQ des symboles de données utilisateur à l'aide des poids de formation de faisceau dans le domaine fréquentiel,
dans lequel les premières données comprennent une indication des poids de formation de faisceau dans le domaine fréquentiel et une indication des estimations de canal.

3. Procédé selon la revendication 1, dans lequel l'obtention des poids de formation de faisceau dans le domaine fréquentiel comprend :
l'extraction (1820) des données IQ des symboles DMRS ;
la détermination (1820) d'estimations de canal par la réalisation d'une estimation de canal sur la base des symboles DMRS ;
le calcul (1820) des poids de formation de faisceau dans le domaine fréquentiel ; et
le calcul (1820) de poids d'égaliseur,
le procédé comprenant en outre :
la génération (1830) des données IQ formées en faisceau des symboles de données utilisateur par la réalisation d'une formation de faisceau et d'une égalisation sur les données IQ des symboles de données utilisateur à l'aide des poids de formation de faisceau dans le domaine fréquentiel et des poids d'égaliseur,
dans lequel les premières données comprennent une indication d'informations relatives à l'égaliseur.

4. Procédé selon l'une quelconque des revendications précédentes, dans lequel la priorisation de la transmission des premières données par rapport à la transmission des deuxièmes données comprend :
en réponse à la génération des premières données et à la génération des deuxièmes données, la transmission (850) des premières données au deuxième nœud de réseau ; et
en réponse à la transmission des premières données au deuxième nœud de réseau, la transmission (860) des deuxièmes données au deuxième nœud de réseau.

5. Procédé selon l'une quelconque des revendications précédentes, dans lequel le premier nœud de réseau comprend une unité radio, RU, et
dans lequel le deuxième nœud de réseau comprend au moins l'une parmi : une unité de bande de base, BBU, et une unité distribuée, DU.

6. Procédé réalisé par un premier nœud de réseau dans un réseau de communication qui inclut un deuxième nœud de réseau couplé en communication au premier nœud de réseau via une interface fronthaul et inclut un dispositif de communication couplé en communication au deuxième nœud de réseau, le procédé comprenant :
la réception (910) de premières données depuis le deuxième nœud de réseau via l'interface fronthaul, les premières données étant associées à un signal de liaison montante reçu depuis le dispositif de communication ;
en réponse à la réception des premières données, la réception (920) de deuxièmes données depuis le deuxième nœud de réseau via l'interface fronthaul, les deuxièmes données étant associées au signal de liaison montante reçu depuis le dispositif de communication ;
la détermination (930) de deuxièmes données traitées par le traitement des deuxièmes données sur la base des premières données ; et
le traitement (940) des deuxièmes données traitées pour décoder des bits d'information inclus dans les deuxièmes données,
dans lequel les premières données comprennent des données en phase et en quadrature, IQ, dans le domaine fréquentiel formées en faisceau de symboles de signal de référence de démodulation, DMRS, associés au signal de liaison montante depuis le deuxième nœud de réseau,
dans lequel les deuxièmes données comprennent des données IQ de symboles de données utilisateur associés au signal de liaison montante,
le procédé comprenant en outre :
la réalisation (1420) d'une estimation de canal sur la base des données IQ dans le domaine fréquentiel formées en faisceau des symboles DMRS ; et
le calcul (1420) de poids de formation de faisceau dans le domaine fréquentiel,
dans lequel la détermination des deuxièmes données traitées comprend la réalisation (1440) d'une formation de faisceau sur les données IQ des symboles de données utilisateur, et
dans lequel le traitement des deuxièmes données traitées comprend la réalisation (1450) d'un démappage en couche, d'une démodulation et d'un décodage des deuxièmes données traitées.

7. Procédé selon la revendication 6, dans lequel la détermination des deuxièmes données traitées comprend la réalisation (1440) d'une égalisation sur les données IQ des symboles de données utilisateur.

8. Procédé selon la revendication 6, dans lequel les premières données comprennent une indication de poids de formation de faisceau dans le domaine fréquentiel et une indication d'estimations de canal,
dans lequel les deuxièmes données comprennent des données en phase et en quadrature, IQ, dans le domaine fréquentiel formées en faisceau de symboles de données utilisateur associés au signal de liaison montante,
le procédé comprenant en outre :
le calcul (1620) de poids d'égalisation sur la base de l'indication des poids de formation de faisceau dans le domaine fréquentiel et de l'indication des estimations de canal,
dans lequel la détermination des deuxièmes données traitées comprend la réalisation (1640) d'une égalisation sur les données IQ des symboles de données utilisateur, et
dans lequel le traitement des deuxièmes données traitées comprend la réalisation (1650) d'un démappage en couche, d'une démodulation et d'un décodage des deuxièmes données traitées.

9. Procédé selon la revendication 6, dans lequel les premières données comprennent des informations associées à un égaliseur du deuxième nœud de réseau,
dans lequel les deuxièmes données comprennent des données en phase et en quadrature, IQ, dans le domaine fréquentiel formées en faisceau de symboles de données utilisateur égalisés associés au signal de liaison montante depuis le deuxième nœud de réseau,
dans lequel la détermination des deuxièmes données traitées comprend la réalisation (1930) d'un démappage en couche et d'une démodulation des données IQ dans le domaine fréquentiel formées en faisceau des symboles de données utilisateur égalisés sur la base des informations associées à l'égaliseur du deuxième nœud de réseau, et
dans lequel le traitement des deuxièmes données traitées comprend la réalisation (1940) du décodage des deuxièmes données traitées.

10. Procédé selon la revendication 9, dans lequel les informations comprennent une indication des poids d'égaliseur, des poids de formation de faisceau dans le domaine fréquentiel et les estimations de canal.

11. Procédé selon l'une quelconque des revendications 6 à 10, dans lequel le premier nœud de réseau comprend au moins l'une parmi : une unité de bande de base, BBU, et une unité distribuée, DU, et
dans lequel le deuxième nœud de réseau comprend une unité radio, RU.

12. Premier nœud de réseau (360, 2300), dans un réseau de communication, le premier nœud de réseau étant adapté pour réaliser des opérations comprenant les opérations selon l'une quelconque des revendications 1 à 11.

13. Programme informatique comprenant un code de programme à exécuter par une circuiterie de traitement (2302) d'un premier nœud de réseau (360, 2300) dans un réseau de communication, selon lequel une exécution du code de programme amène le premier nœud de réseau à réaliser des opérations comprenant les opérations selon l'une quelconque des revendications 1 à 11.

14. Système comprenant une unité distribuée, DU, adaptée pour réaliser le procédé selon l'une quelconque des revendications 6 et 11 et une unité radio, RU, adaptée pour réaliser le procédé selon l'une quelconque des revendications 1 à 5, la DU et la RU étant connectées l'une à l'autre via une interface fronthaul.
